# EUROPEAN PATENT APPLICATION

(11) **EP 4 481 339 A1**
(43) Date of publication of application: **25.12.2024**
(21) Application number: 23755962.0
(22) Date of filing: 24.01.2023
(51) Int. Cl.: G01G 19/414, G07G 1/00

(54) **WEIGHING DEVICE, SALES SYSTEM, AND DISPLAY DEVICE**

(30) Priority: 15.02.2022 JP 2022021173; 15.02.2022 JP 2022021175
(71) Applicant: Teraoka Seiko Co., Ltd., Tokyo 146-8580 (JP)
(72) Inventor: YOKONO, Syuusaku, Tokyo, 146--8580 (JP); ENDO, Sakae, Tokyo, 146--8580 (JP); HARAGUCHI, Hideaki, Tokyo, 146--8580 (JP)
(74) Representative: Osha BWB
(86) International application number: PCT/IB2023/050598
(87) International publication number: WO 2023/156859

(57) **Abstract**

A weighing device provided with a weighing means for weighing the weight of articles, and an output means for outputting article purchase information including a purchase weight value based on the measurement value obtained by the weighing means, wherein: the output means outputs article purchase information including a positive value as the purchase weight value if the measurement value obtained by the weighing means increases from zero to become a positive value and thereafter decreases from the positive value to zero; and the output means outputs information indicating that all of the weighted articles remain if the measurement value increases from zero and thereafter remains a value other than zero without decreasing, and the measurement value does not change from said value other than zero for a prescribed period of time.

## Description

### Technical Field

The present invention relates to a weighing device, a sales system, and a display device.

### Background Art

For example, a system is known wherein the weight of an item placed on a weighing tray 3 on the upper part of a main body 2 is measured by a weighing device inside the main body 2 and the product is sold (see, for example, Patent Literature 1).

### Prior Art Literature

### Patent Literature

Patent Literature 1: JP H6-50740 Y

However, conventional systems such as that shown in Patent Literature 1 do not adequately address the various situations that may be anticipated in the sale of goods by weight, in which a good is released from a supply device by operation of a customer, and there is room for improvement.

### Summary of Invention

The present invention has been made in consideration of the above circumstances, and an object thereof is to provide a technique that can suitably handle various situations anticipated in the sale of goods by weight. For example, the weighing device and sales systems according to one or more embodiments of the present invention performs processing to ensure accurate weighing sales when an unexpected operation occurs, such as a customer returning a good that has already been released back to the supply device or performing multiple operations on the same good. This avoids complicating the calculation process, prevents incorrect payment processing, and prevents inappropriate operations by customers. As a result, the operability of the weighing device and the sales system is improved. Furthermore, the display device according to one or more embodiments of the present invention simplifies customer operation by controlling the display based on the measured weight in response to the customer's operation. As a result, the operability of the display device is improved. Thus, the present invention provides technical improvements in the functionality of weighing devices, sales systems, and display devices.

In order to solve the above-mentioned problems, the weighing device according to one aspect is provided with weighing means for measuring the weight of a good, and output means for outputting goods purchase information including a purchase weight value based on a measured value from the weighing means, wherein: when the measured value from the weighing means increases from zero to a positive value and then decreases from the positive value to zero, the output means outputs goods purchase information including the positive value as the purchase weight value, and when the measured value increases from zero and then becomes a value other than zero without ever decreasing, and the measured value does not change from the value other than zero for a predetermined time, the output means outputs information indicating that all of the weighed goods remain.

In order to solve the above-mentioned problems, the weighing device according to one aspect is provided with weighing means for measuring the weight of a good, and output means for outputting goods purchase information including a purchase weight value based on a measured value from the weighing means, wherein: when the measured value from the weighing means increases from zero to a positive value and then decreases from the positive value to zero, the output means outputs goods purchase information including the positive value as the purchase weight value, and when the measured value increases from zero and then becomes a value other than zero after decreasing, and the measured value does not change from the value other than zero for a predetermined time, the output means outputs information indicating that some of the weighed goods remain.

In order to solve the above-mentioned problems, the weighing device according to one aspect is provided with weighing means for measuring the weight of a good, and output means for outputting goods purchase information including a purchase weight value based on a measured value from the weighing means, wherein: when the measured value from the weighing means increases from zero to a positive value and then decreases from the positive value to zero, the output means outputs goods purchase information including the positive value as the purchase weight value, and when the measured value increases from zero, then decrease, and the measured value increases before reaching zero, the output means outputs abnormal information indicating that an abnormal operation has occurred.

In order to solve the above-mentioned problems, the weighing device according to one aspect is provided with weighing means for measuring the weight of a good, and output means for outputting goods purchase information including a purchase weight value based on a measured value from the weighing means, wherein: when the measured value from the weighing means increases from zero to a positive value and then decreases from the positive value to zero, and then the measured value does not decrease even once in the process of starting from zero until reaching the positive value and the measured value does not increase even once in the process of starting from the positive value until reaching zero, the output means outputs goods purchase information including the positive value as the purchase weight value based on the fact that the measured value has reached zero.

In order to solve the above-mentioned problems, the sales system according to one aspect is a sales system including a weighing device and a display device, wherein the weighing device is provided with weighing means for measuring the weight of a good, and output means for outputting goods purchase information including a purchase weight value based on a measured value from the weighing means, and the display device is provided with receiving means and display means, wherein: when the measured value increases from zero and then decreases and the measured value has increased before reaching zero, the output means outputs abnormal information indicating that an abnormal operation has occurred instead of the goods purchase information, and when the receiving means has received the goods purchase information, the display means displays a goods selection region including a good name and a purchase weight value based on the goods purchase information, and when the receiving means has received the abnormal information, the display means displays information indicating that an abnormal operation has occurred based on the abnormal information.

In order to solve the above-mentioned problems, the weighing device according to one aspect is a weighing device provided with weighing means, a first display region for displaying a measured weight from the weighing means, a second display region for displaying a decrease in the measured weight as a purchase weight, a third display region for displaying a unit price, and a fourth display region for displaying a purchase amount based on the unit price and the purchase weight, and being further provided with display control means for displaying the purchase amount in the fourth display region when the measured weight has decreased, and for displaying information other than the purchase amount as a display of the fourth display region or hiding a display of the fourth display region when the measured weight has increased, and modifying means for modifying a display of the fourth display region to a display indicating zero when the display control means is displaying information other than the purchase amount as a display of the fourth display region or when a display of the fourth display region is hidden.

In order to solve the above-mentioned problems, the display device according to one aspect is a display device provided a first display region for displaying a measured weight from the weighing means, a second display region for displaying a decrease in the measured weight as a purchase weight, a third display region for displaying a unit price, and a fourth display region for displaying a purchase amount based on the unit price and the purchase weight, and being further provided with display control means for displaying the purchase amount in the fourth display region when the measured weight has decreased, and for displaying information other than the purchase amount as a display of the fourth display region or hiding a display of the fourth display region when the measured weight has increased, and modifying means for modifying a display of the fourth display region to a display indicating zero when the display control means is displaying information other than the purchase amount as a display of the fourth display region or when a display of the fourth display region is hidden.

### Brief Description of Drawings

FIG. 1 is an example of a network configuration of a sales processing system 1 according to one embodiment.
FIG. 2 is an example of the external appearance of a sales unit 2 in which the sales processing system 1 is installed.
FIG. 3 is an example of the configuration of a weighing device 10.
FIG. 4 is an example of the external appearance and the like of the weighing device 10.
FIG. 5A is a diagram illustrating the weighing device 10 and the like in a state wherein a good is being removed from a goods supply device 100 into a container 120 (a state wherein the measured weight is not stable).
FIG. 5B is a diagram illustrating the weighing device 10 and the like in a state wherein a good has been removed from the goods supply device 100 into the container 120 (a state wherein the measured weight is stable).
FIG. 6 is an example of the external appearance and the like of a weighing device 20.
FIG. 7A is a diagram illustrating the weighing device 20 and the like in a state wherein a good is being released from a goods supply device 200 into a container 220 (a state wherein the measured weight is not stable).
FIG. 7B is a descriptive diagram illustrating the weighing device 20 and the like in a state wherein a good has been completely released from the goods supply device 200 into the container 220 (a state wherein the measured weight is stable).
FIG. 8 is an example of the external appearance and the like of a weighing device 30.
FIG. 9A is a diagram illustrating the weighing device 30 and the like in a state wherein a good is being released from a goods supply device 300 into a weighing device 30 (a state wherein the measured weight is not stable).
FIG. 9B is a diagram illustrating the weighing device 30 and the like in a state wherein a good has been completely released from the goods supply device 300 into the weighing device 30 (a state wherein the measured weight is stable).
FIG. 9C is a diagram illustrating the weighing device 30 and the like in a state wherein a good is being released from the weighing device 30 into a container 320 (a state wherein the measured weight is not stable).
FIG. 10A is a side view of a guide body 38 side when the weighing device 30 is disassembled into a main body 30A side and the guide body 38 side, and illustrates when in a closed state.
FIG. 10B is a side view of the guide body 38 side when the weighing device 30 is disassembled into the main body 30A side and the guide body 38 side, and illustrates when in an open state.
FIG. 10C is a side view illustrating the internal structure of the main body 30A side when the weighing device 30 is disassembled into the main body 30A side and the guide body 38 side.
FIG. 10D is a side view illustrating the internal structure of the weighing device 30, and illustrates when in the closed state.
FIG. 10E is a side view illustrating the internal structure of the weighing device 30, and illustrates when in the open state.
FIG. 11 is an example of the external appearance and the like of a display printing device 40.
FIG. 12 is a descriptive diagram for describing a transition and the like of a reference weight, a measured weight, and a purchase weight in the weighing device 10.
FIG. 13A is a flowchart illustrating an example of the operation of the weighing device 10.
FIG. 13B is a flowchart illustrating an example of the operation of the weighing device 10.
FIG. 13C is a flowchart illustrating an example of the operation of the weighing device 10.
FIG. 14A is an example of display on the display unit 15 of the weighing device 10.
FIG. 14B is an example of display on the display unit 15 of the weighing device 10.
FIG. 14C is an example of display on the display unit 15 of the weighing device 10.
FIG. 14D is an example of display on the display unit 15 of the weighing device 10.
FIG. 14E is an example of display on the display unit 15 of the weighing device 10.
FIG. 14F is an example of display on the display unit 15 of the weighing device 10.
FIG. 14G is an example of display on the display unit 15 of the weighing device 10.
FIG. 14H is an example of display on the display unit 15 of the weighing device 10.
FIG. 15A is an example of display on a display unit 45 of the display printing device 40.
FIG. 15B is an example of display on the display unit 45 of the display printing device 40.
FIG. 15C is an example of display on the display unit 45 of the display printing device 40.
FIG. 15D is an example of display on the display unit 45 of the display printing device 40.
FIG. 16A is an example of display on the display unit 45 of the display printing device 40.
FIG. 16B is an example of display on the display unit 45 of the display printing device 40.
FIG. 16C is an example of display on the display unit 45 of the display printing device 40.
FIG. 16D is an example of display on the display unit 45 of the display printing device 40.
FIG. 17A is a flowchart illustrating an example of the operation of the display printing device 40.
FIG. 17B is a flowchart illustrating an example of the operation of the display printing device 40.
FIG. 18 is an example of display on the display unit 45 of the display printing device 40.
FIG. 19A is a descriptive diagram for describing a transition and the like of a measured weight in the weighing device 30.
FIG. 19B is a descriptive diagram for describing a transition and the like of a measured weight in the weighing device 30.
FIG. 20 is a descriptive diagram for describing a transition and the like of a measured weight in the weighing device 30.
FIG. 21A is a descriptive diagram for describing a transition and the like of a measured weight in the weighing device 30.
FIG. 21B is a descriptive diagram for describing a transition and the like of a measured weight in the weighing device 30.
FIG. 22 is a descriptive diagram for describing a transition and the like of a measured weight in the weighing device 30.
FIG. 23A is a flowchart illustrating an example of the operation of the weighing device 30.
FIG. 23B is a flowchart illustrating an example of the operation of the weighing device 30.
FIG. 23C is a flowchart illustrating an example of an operation of the weighing device 30.
FIG. 23D is a flowchart illustrating an example of the operation of the weighing device 30.
FIG. 23E is a flowchart illustrating an example of the operation of the weighing device 30.
FIG. 23F is a flowchart illustrating an example of the operation of the weighing device 30.
FIG. 24A is an example of display on the display unit 45 of the display printing device 40.
FIG. 24B is an example of display on the display unit 45 of the display printing device 40.
FIG. 24C is an example of display on the display unit 45 of the display printing device 40.
FIG. 24D is an example of display on the display unit 45 of the display printing device 40.

### Embodiments of Invention

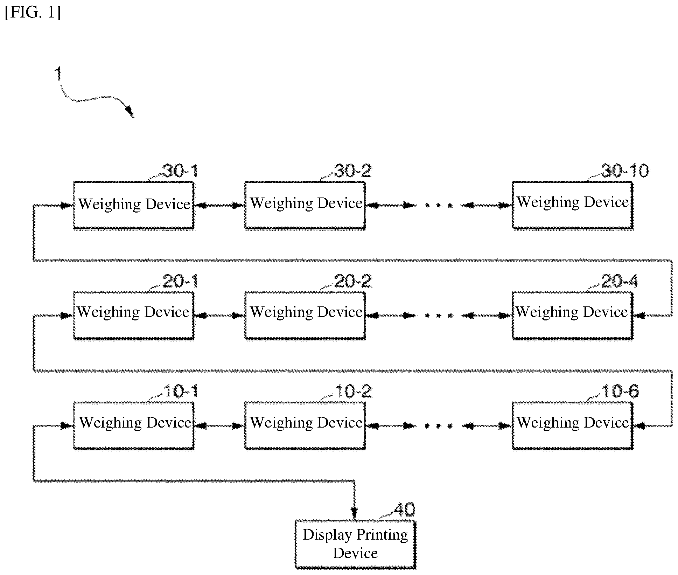

FIG. 1 is an example of a network configuration of a sales processing system 1 according to an embodiment of the present invention. The sales processing system 1 includes a weighing device 10, a weighing device 20, a weighing device 30, and a display printing device 40. For example, as illustrated in FIG. 1, the sales processing system 1 includes six weighing devices 10 (weighing device 10-1, weighing device 10-2, ..., weighing device 10-6), four weighing devices 20 (weighing device 20-1, weighing device 20-2, ..., weighing device 20-4), ten weighing devices 30 (weighing device 30-1, weighing device 30-2, ..., weighing device 30-10), and one display printing device 40. Note that the number illustrated is merely an example. In other words, the number of weighing devices 10 may be one or more. The same is true for the number of weighing devices 20, the weighing devices 30, and the display printing devices 40.

Each of the devices in the sales processing system 1 is communicably connected. In the present embodiment, as illustrated in FIG. 1, for example, the respective devices are communicably connected by the multi-drop method (chain method) according to RS-485. Note that the mode of connection is not limited to the multi-drop method. For example, a star method (type) centered on the display printing device 40 or a ring method (type) including the display printing device 40 are also possible. Moreover, radio communication (wireless communication) is also possible. Note that power supply and communication may be performed using a common cable or the like.

Each device configuring the sales processing system 1 (weighing device 10, weighing device 20, weighing device 30, and display printing device 40) is operated by a customer who purchases goods to be sold after being weighed. In other words, normal processing (transactions) in each device is performed by the customer themselves. On the other hand, specific processing (various setting processing, processing after calling an employee, processing after an error occurs, and the like) in each device is performed by an employee.

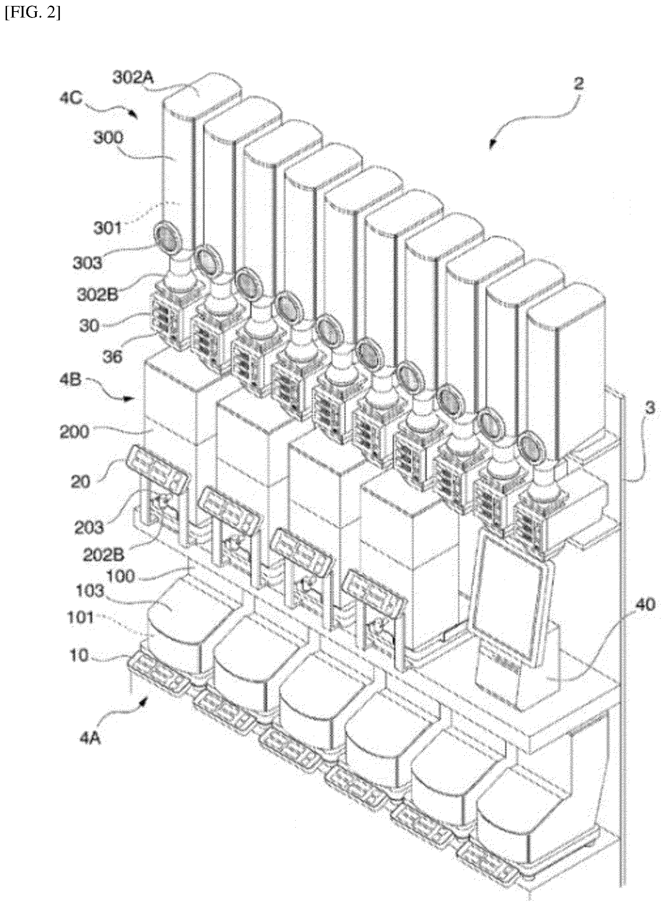

FIG. 2 is an example of the external appearance of the sales unit 2 including the sales processing system 1. A sales processing system 1 is installed at a store (for example, a supermarket or the like) that handles goods sold by weight (hereinafter, sometimes simply referred to as a good or product). For example, the sales processing system 1 is installed at a store as the sales unit 2 such as that illustrated in FIG. 2.

### (Sales Unit 2)

The sales unit 2 is configured by a shelf 3, a first weighing unit 4A, a second weighing unit 4B, a third weighing unit 4C, and the display printing device 40.

### (First Weighing Unit 4A)

The first weighing unit 4A is configured by six weighing devices 10 and six goods supply devices 100. The respective weighing devices 10 have one goods supply device 100 set thereon. In other words, the first weighing unit 4A is provided with six sets, each set consisting of one weighing device 10 and one goods supply device 100. Note that a scoop (not illustrated in the drawings) used when removing a good from the goods supply device 100 is disposed near each weighing device 10 (or the goods supply device 100).

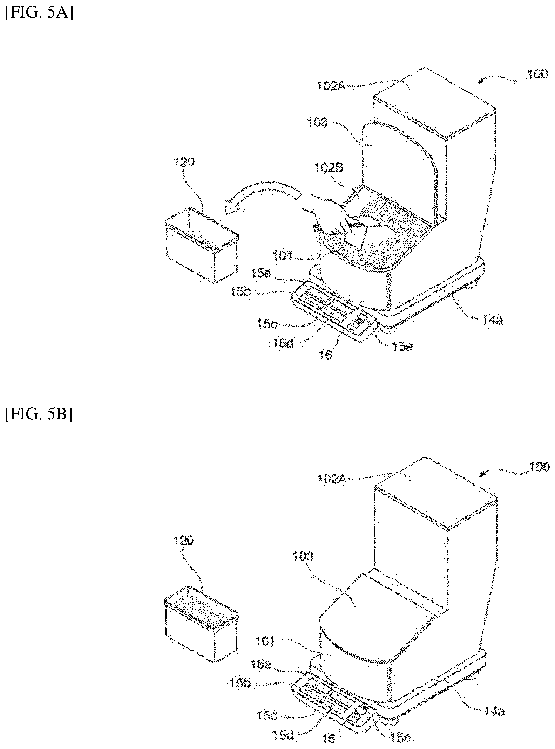

The goods supply device 100 is provided with a housing portion 101, an insertion portion 102A (see FIG. 5A), a removal portion 102B (see FIG. 5A), and a lid portion 103. The housing portion 101 houses a good (solid). The insertion portion 102A is an insertion port through which a good to be housed in the housing portion 101 is inserted. The removal portion 102B is a removal port through which a good housed in the housing portion 101 is removed. The lid portion 103 is operated (opened) when the good housed in the housing portion 101 is removed from the removal portion 102B.

The goods supply device 100 is installed so that the weight of the goods supply device 100 and the weight of the good housed in the goods supply device 100 is measured using the weighing device 10. In other words, in a customer waiting state (non-transaction state, waiting state), the weighing device 10 measures the weight of the goods supply device 100 and the good housed in the goods supply device 100. In other words, the weighing device 10 understands decreases in the measured weight before and after the good is removed by the customer as the purchase weight (selling weight) of the good by the customer.

The weighing device 10 calculates the decrease in the measured weight before and after the good is removed by the customer as the purchase weight of the goods by the customer. The weighing device 10 transmits information (for example, device identification information of the weighing device 10 and the purchase weight) used for issuing a label (also referred to as a goods label, a product label, or a price label) to the display printing device 40 based on operation by a customer (operation of an operation unit 16 described hereinafter). The device identification information is identification information to identify the respective devices in the sales processing system 1 (weighing device 10-1, weighing device 10-2,..., weighing device 20-1, weighing device 20-2, ..., weighing device 30-1, weighing device 30-2, ..., display printing device 40) The device identification information is sufficient as long as it is information that can at least identify the respective devices in the sales processing system 1. The device identification information may be an Internet Protocol address (IP address), a Media Access Control address (MAC address), or other identification information determined within the sales processing system 1.

The employee places the good to be sold in the goods supply device 100. That is, the employee inserts a good into the insertion portion 102A.

The customer places a desired amount of the good housed in the goods supply device 100 into a take-home container (for example, the container 120 illustrated in FIG. 5A and FIG. 5B). Specifically, the customer opens the lid portion 103 and uses the scoop to place the desired amount of the good housed in the housing portion 101 into a take-home container. The weighing device 10 calculates the decrease in the measured weight before and after the good is removed by the customer. Next, the customer closes the lid portion 103 and operates the weighing device 10 (operation unit 16). Note that as described above, the weighing device 10 transmits information (also referred to as goods purchase information or goods weighing information) relating to the purchase (weighing) of goods to the display printing device 40 based on the operation of the operation unit 16. Note that the goods purchase information (goods weighing information) may be referred to as goods button display information because it is also information used for displaying a goods button (described hereinafter), or may be referred to as label issuance information because it is also information used for printing and issuing labels. Next, the customer moves to the display printing device 40 and operates the display printing device 40 to make the display printing device 40 issue a label.

### (Second Weighing Unit 4B)

The second weighing unit 4B is configured by four weighing devices 20 and four goods supply devices 200. The respective weighing devices 20 have one goods supply device 200 set thereon. In other words, the second weighing unit 4B is provided with four sets, each set consisting of one weighing device 20 and one goods supply device 200.

The goods supply device 200 is provided with a housing portion 201 (not illustrated in drawings), an insertion portion 202A (not illustrated in drawings), a release portion 202B, and a goods release operation unit 203. The housing portion 201 houses a good (liquid). The insertion portion 202A is an insertion port through which a good to be housed in the housing portion 201 is inserted. The release portion 202B is a release port through which a good housed in the housing portion 201 is released. The goods release operation unit 203 is operated when the good housed in the housing portion 201 is released from the release portion 202B.

The goods supply device 200 is installed so that the weight of the goods supply device 200 and the weight of the good housed in the goods supply device 200 is measured using the weighing device 20. In other words, in the customer waiting state, the weighing device 20 measures the weight of the goods supply device 200 and the good housed in the goods supply device 200. That is, the weighing device 20 understands a decrease in the measured weight before and after the good is released by the customer as the purchase weight of the good by the customer. The goods release operation unit 203 is configured to continue to release the good throughout the duration of operation and stop releasing when the operation is stopped (for example, a push-down button). However, the goods release operation unit 203 may be configured to start releasing the good based on a start operation and stop releasing based on a stop operation (for example, a lever or a handle).

The weighing device 20 calculates the decrease in the measured weight before and after the good is released by the customer as the purchase weight of the goods by the customer. The weighing device 20 transmits goods purchase information (for example, device identification information of the weighing device 20 and the purchase weight) to the display printing device 40 based on operation by a customer (operation of an operation unit 26 described hereinafter).

The employee places the good to be sold in the goods supply device 200. That is, the employee inserts a good into the insertion portion 202A.

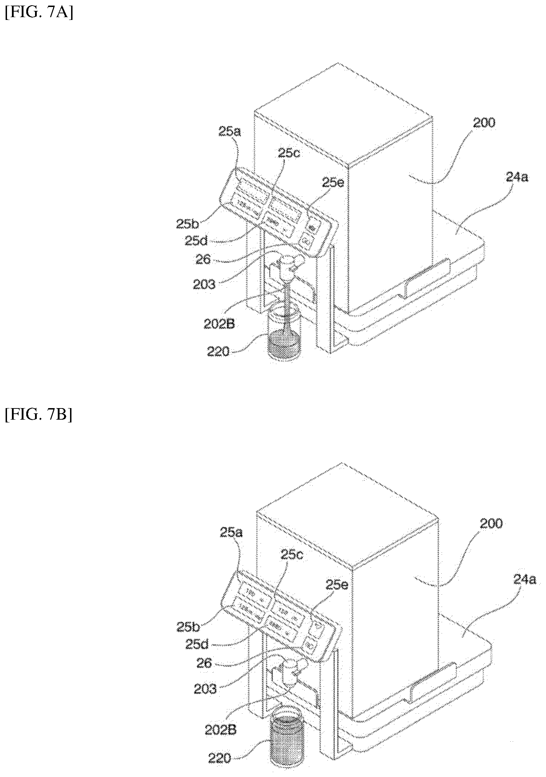

The customer places a desired amount of the good housed in the goods supply device 200 into a take-home container (for example, the container 220 illustrated in FIG. 7A and FIG. 7B). Specifically, the customer inserts the good into a take-home container by operating the goods release operation unit 203 and releasing the desired amount of the good housed in the housing portion 201 from the release portion 202B. The weighing device 20 calculates the decrease in the measured weight before and after the good is removed by the customer. Next, the customer operates the weighing device 20 (operation unit 26). Note that as described above, the weighing device 20 transmits goods purchase information to the display printing device 40 based on the operation of the operation unit 26. Next, the customer moves to the display printing device 40 and operates the display printing device 40 to make the display printing device 40 issue a label.

### (Third Weighing Unit 4C)

The third weighing unit 4C is configured by ten weighing devices 30 and ten goods supply devices 300. The respective weighing devices 30 have one goods supply device 300 set thereon. In other words, the third weighing unit 4C is provided with ten sets, each set consisting of one weighing device 30 and one goods supply device 300.

The goods supply device 300 is provided with a housing portion 301, an insertion portion 302A, a release portion 302B, and a goods release operation unit 303. The housing portion 301 houses a good (solid). The insertion portion 302A is an insertion port through which a good to be housed in the housing portion 301 is inserted. The release portion 302B is a release port through which a good housed in the housing portion 301 is released. The goods release operation unit 303 is configured to start releasing the good based on a start operation and stop releasing based on a stop operation (for example, a handle or a lever). However, the goods release operation unit 303 may be configured to continue to release the good throughout the duration of operation and stop releasing when the operation is stopped (for example, a push-down button).

The weighing device 30 houses a good released from the goods supply device 300 (release portion 302B). The weighing device 30 measures the weight of the housed good. The weighing device 30 releases the good that has been weighed based on an operation of the goods release operation unit 36. When the weighed good has been completely released, the weighing device 30 transmits goods purchase information (for example, device identification information of the weighing device 30 and the purchase weight) to the display printing device 40.

The employee places the good to be sold in the goods supply device 300. That is, the employee inserts a good into the insertion portion 302A.

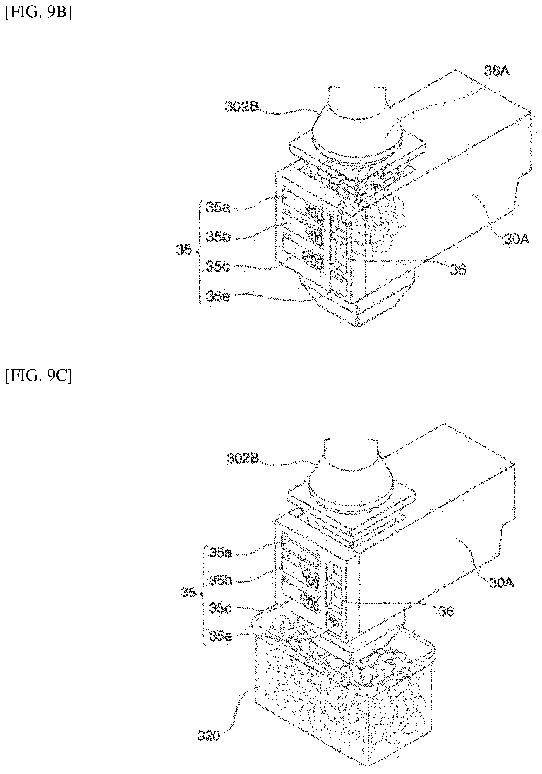

The customer moves the desired amount of a good contained in the goods supply device 300 to the weighing device 30. Specifically, the customer inserts the good into the weighing device 30 by operating the goods release operation unit 303 and releasing the desired amount of the good housed in the housing portion 301 from the release portion 302B. The weighing device 30 measures the weight of the housed good (desired amount of good). Next, the customer moves all of the good (good that has been weighed) housed in the weighing device 30 to a take-home container (for example, the container 320 illustrated in FIG. 9C). Specifically, the customer releases all of the good from the weighing device 30 into a take-home container by operating the goods release operation unit 36. Note that as described above, the weighing device 30 transmits the goods purchase information to the display printing device 40 based on all articles being released into the take-home container. Next, the customer moves to the display printing device 40 and operates the display printing device 40 to make the display printing device 40 issue a label.

### (Weighing Device 10)

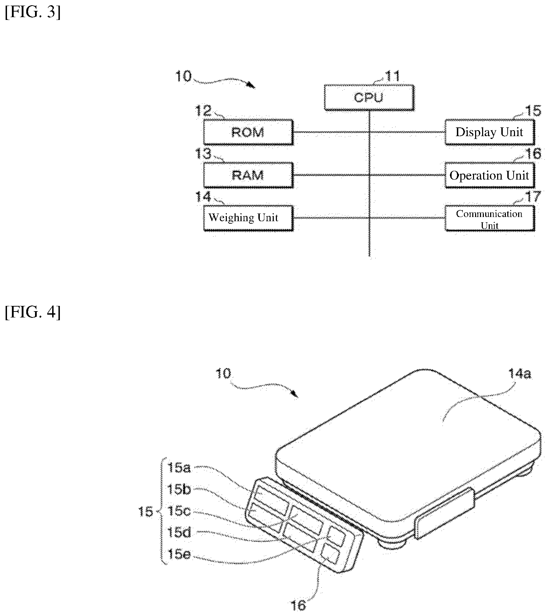

FIG. 3 is an example of the configuration of a weighing device 10. FIG. 4 is an example of the external appearance and the like of the weighing device 10. FIG. 5A is a diagram illustrating the weighing device 10 and the like in a state wherein a good is being removed from a goods supply device 100 into a container 120 (a state wherein the measured weight is not stable). FIG. 5B is a descriptive diagram illustrating the weighing device 10 and the like in a state wherein a good has been removed from the goods supply device 100 into the container 120 (a state wherein the measured weight is stable). In FIG. 3, FIG. 4, FIG. 5A, and FIG. 5B, the same portions are given the same reference numerals. The weighing device 10 will be described below with reference to FIG. 3, FIG. 4, FIG. 5A and FIG. 5B.

The weighing device 10 is provided with a CPU 11, a ROM 12, a RAM 13, a weighing unit 14, a display unit 15, an operation unit 16, and a communication unit 17. These are connected to each other via a bus.

The CPU 11 controls the operation of the weighing device 10 by reading and executing a program stored in the ROM 12. For example, the CPU 11 calculates the decrease in the measured weight before and after the good is removed by the customer (good housed in the goods supply device 100) as the purchase weight of the goods by the customer.

The ROM 12 is a read-only memory, and stores various information used by the CPU 11, including programs, for example. The RAM 13 is a read/write memory, and stores various information such as information read from the ROM 12, information processed (calculated, generated, updated, or the like) by the CPU 11, information referenced by the CPU 11 in the above processing, information obtained via the communication unit 17, and information obtained by the weighing unit 14. For example, the RAM 13 stores a reference weight (the combined weight of the goods supply device 100 and the good housed in the goods supply device 100 before a transaction begins) for calculating the reduction in measured weight, a warning weight for notifying about refilling a good housed in the goods supply device 100 or replacing a good housed in the goods supply device 100, and the unit price of a good (good housed in the goods supply device 100 that will be a set) obtained via communication unit 17.

The weighing unit 14 measures the weight of a good placed on a platform 14a. The weighing unit 14 measures the weight of the good, for example, using a weight detection method using a load cell. Specifically, the weighing unit 14 measures the combined weight of the goods supply device 100 and the good housed in the goods supply device 100, as illustrated in FIG. 5A and FIG. 5B.

The display unit 15 displays the purchase weight or the like to the customer. The display unit 15 is configured by five displays (display 15a, display 15b, display 15c, display 15d, and display 15e). The display unit 15 (displays 15a to 15e) may be, for example, a liquid crystal panel.

The display 15a displays the purchase weight. Note that the display 15a may display information indicating that the display is being prepared (for example, a rectangle formed by a broken line such as that illustrated in FIG. 5A, a broken line "---", or the like) when a good is being removed from the goods supply device 100 into the container 120 (when the measured weight is not stable). The display 15b displays the unit price of the good to be purchased (the good housed in the goods supply device 100). The display 15c displays the purchase amount (purchase price, sale amount, sales price) of the good for the purchase weight. Note that the display 15c may display information indicating that the display is being prepared as illustrated in FIG. 5A when a good is being removed from the goods supply device 100 into the container 120 (when the measured weight is not stable). The display 15d displays the measured weight. That is, the display 15d displays the combined weight of the goods supply device 100 and the good housed in the goods supply device 100.

The display 15e displays the state (status) of the weighing device 10. For example, the display 15e displays a mark (icon) such as that illustrated in FIG. 5A when a good is being removed from the goods supply device 100 into the container 120 (when the measured weight is not stable). Moreover, the display 15e displays a mark such as that illustrated in FIG. 5B when a good has been removed from the goods supply device 100 into the container 120 (when the measured weight is stable).

Note that in the example illustrated in FIG. 5A, information indicating that the display is being prepared is displayed on the display unit 15a, "500 (yen/100g)" is displayed on the display 15b, information indicating that the display is being prepared is displayed on the display unit 15c, and "1100 (g)" is displayed on the display 15d. Moreover, in the example illustrated in FIG. 5B, "150 (g)" is displayed on the display 15a, "500 (yen/100g)" is displayed on the display 15b, "750 (yen)" is displayed on the display unit 15c, and "1050 (g)" is displayed on the display 15d.

The operation unit 16 accepts operations from a customer. Note that, in the present embodiment, the operation unit 16 is one or more hard buttons (push buttons) disposed on the housing, but may also be one or more soft buttons (touch buttons) displayed in an operable manner. That is, the display unit 15 may be a touch panel that displays the purchase weight or the like to the customer and receives operations from the customer. The same is also true of a display unit 25 (described hereafter) and the operation unit 26 (described hereafter) provided in the weighing device 20.

The communication unit 17 transmits and receives information to and from another device. For example, the communication unit 17 transmits goods purchase information to the display printing device 40 based on an operation of the operation unit 16.

Note that, although not shown in the drawings, the weighing device 10 may be provided with a hard disk. The hard disk may store various information in place of or in addition to the RAM 13. The same is true for the weighing device 20, the weighing device 30, and the display printing device 40. Moreover, the weighing device 10 may also be provided with an SSD (Solid State Drive) instead of a hard disk. The same is true for the weighing device 20, the weighing device 30, and the display printing device 40.

Moreover, the weighing device 10 may also be provided with a timing unit (timing function). For example, the weighing device 10 may be capable of managing the current time, a remaining time until a specific time, or a time that has passed since a specific state was reached, using a timing unit. The same is true for the weighing device 20 and the display printing device 40. Moreover, the weighing device 10 may be provided with an audio output unit. For example, the weighing device 10 may output a sound depending on the situation (for example, an error sound). The same is true for the weighing device 20, the weighing device 30, and the display printing device 40. Moreover, the weighing device 10 may be provided with a motion sensor. For example, the weighing device 10 may use a motion sensor to determine whether or not a person is present nearby (for example, in front of the weighing device 10). The same is true for the weighing device 20, the weighing device 30, and the display printing device 40.

### (Weighing Device 20)

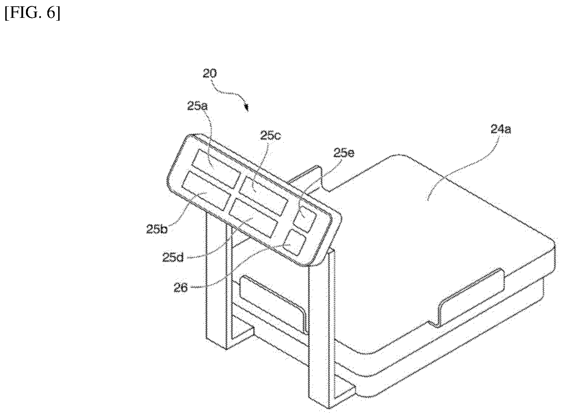

FIG. 6 is an example of the appearance and the like of the weighing device 20. FIG. 7A is a diagram illustrating the weighing device 20 and the like in a state wherein a good is being released from the goods supply device 200 into the container 220 (a state wherein the measured weight is not stable). FIG. 7B is a diagram illustrating the weighing device 20 and the like in a state wherein a good has been completely released from the goods supply device 200 into the container 220 (a state wherein the measured weight is stable). In FIG. 6, FIG. 7A, and FIG. 7B, the same portions are given the same reference numerals. The weighing device 20 will be described below with reference to FIG. 6, FIG. 7A, and FIG. 7B.

Although a configuration diagram is not illustrated, the weighing device 20, similar to the weighing device 10, is provided with a CPU, a ROM, a RAM, a weighing unit, a display unit, an operation unit, and a communication unit. Hereinafter, the CPU, ROM, RAM, weighing unit, display unit, operation unit, and communication unit provided in the weighing device 20 will be referred to as a CPU 21, a ROM 22, a RAM 23, a weighing unit 24, a display unit 25, an operation unit 26, and a communication unit 27, respectively. The CPU 21, the ROM 22, the RAM 23, the weighing unit 24, the display unit 25, the operation unit 26, and the communication unit 27 are connected to each other via a bus.

The CPU 21, for example, similar to the CPU 11 of the weighing device 10, calculates the decrease in the measured weight before and after the good is released by the customer (good housed in the goods supply device 200) as the purchase weight of the goods by the customer.

The ROM 22, similar to the ROM 12 of the weighing device 10, stores various information used by the CPU 21, including programs, for example. The RAM 23, for example, similar to the RAM 13 of the weighing device 10, stores a reference weight (the combined weight of the goods supply device 200 and the good housed in the goods supply device 200 before a transaction begins) for calculating the reduction in measured weight, a warning weight for notifying about refilling a good housed in the goods supply device 200 or replacing a good housed in the goods supply device 200, and the unit price of a good (good housed in the goods supply device 200 that will be a set) obtained via communication unit 27.

The weighing unit 24, similar to the weighing unit 14 of the weighing device 10, measures the weight of the good, for example, using a weight detection method using a load cell. Specifically, the weighing unit 24 measures the combined weight of the goods supply device 200 and the good housed in the goods supply device 200, as illustrated in FIG. 7A and FIG. 7B.

The configuration of the display unit 25 is the same as that of the display unit 15 of the weighing device 10. For example, the display unit 25 displays respective information to the respective displays (display 25a, display 25b, display 25c, display 25d, and display 25e) as illustrated in FIG. 7A when a good is being released from the goods supply device 200 into the container 220 (when the measured weight is not stable). Moreover, the display unit 25 displays respective information to the respective devices as illustrated in FIG. 7B when a good has been completely released from the goods supply device 200 into the container 220 (when the measured weight is stable).

Note that in the example illustrated in FIG. 7A, information indicating that the display is being prepared is displayed on the display unit 25a, "125 (yen/100g)" is displayed on the display 25b, information indicating that the display is being prepared is displayed on the display 25c, and "3980 (g)" is displayed on the display 25d. Moreover, in the example illustrated in FIG. 7B, "120 (g)" is displayed on the display 25a, "125 (yen/100g)" is displayed on the display 25b, "150 (yen)" is displayed on the display 25c, and "3880 (g)" is displayed on the display 25d.

The operation unit 26, similar to the operation unit 16 of the weighing device 10, accepts operations from a customer. The communication unit 27 similar to the communication unit 17 of the weighing device 10, transmits and receives information to and from another device. For example, the communication unit 27 transmits goods purchase information to the display printing device 40 based on an operation of the operation unit 26.

### (Weighing Device 30)

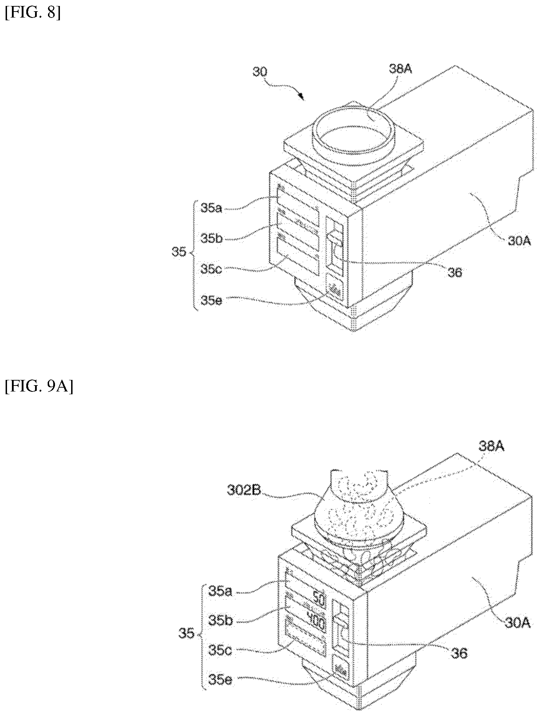

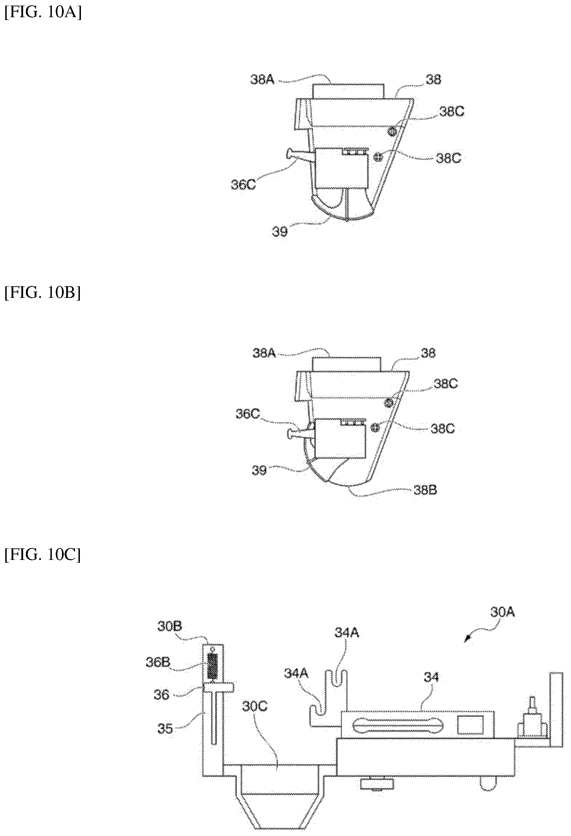

FIG. 8 is an example of the appearance and the like of the weighing device 30. FIG. 9A is a diagram illustrating the weighing device 30 and the like in a state wherein a good is being released from a goods supply device 300 into a weighing device 30 (a state wherein the measured weight is not stable). FIG. 9B is a diagram illustrating the weighing device 30 and the like in a state wherein a good has been completely released from the goods supply device 300 into the weighing device 30 (a state wherein the measured weight is stable). FIG. 9C is a diagram illustrating the weighing device 30 and the like in a state wherein a good is being released from the weighing device 30 into a container 320 (a state wherein the measured weight is not stable). In FIG. 8 and FIG. 9A to FIG. 9C (the same is also true for FIG. 10A to FIG. 10E), the same portions are given the same reference numerals. The weighing device 30 will be described below with reference to FIG. 8, and FIG. 9A to FIG 9C.

Although a configuration diagram is not illustrated, the weighing device 30 is provided with a CPU, a ROM, a RAM, a weighing unit, a display unit, and a communication unit. Hereinafter, the CPU, ROM, RAM, weighing unit, display unit, and communication unit provided in the weighing device 30 will be referred to as a CPU 31, a ROM 32, a RAM 33, a weighing unit 34, a display unit 25, and a communication unit 37, respectively. The CPU 31, the ROM 32, the RAM 33, the weighing unit 34, the display unit 35, and the communication unit 37 are connected to each other via a bus. Moreover, the weighing device 30 may also be provided with a timing unit (timing function). Additionally, the weighing device 30 is provided with a goods release operation unit 36, a guide body 38 (described hereafter), a lid body 39 (described hereafter), and the like.

The CPU 31 controls the operation of the weighing device 30 by reading and executing a program stored in the ROM 32. For example, the CPU 31 calculates the measured weight of the good supplied from the goods supply device 300 as the purchase weight of the good by the customer.

The ROM 32 is a read-only memory, and stores various information used by the CPU 31, including programs, for example. The RAM 33 is a read/write memory, and stores various information such as information read from the ROM 32, information processed (calculated, generated, updated, or the like) by the CPU 31, information referenced by the CPU 31 in the above processing, information obtained via the communication unit 37, and information obtained by the weighing unit 34. For example, the RAM 33 stores a weight for determining (sometimes referred to as a determination weight) to determine an increase or decrease in the measured weight (that is, whether a good is being released from the goods supply device 300 into the weighing device 30 or from the weighing device 30 into the container 320), and the unit price of the good (good housed in the goods supply device 300 that will be a set) obtained via the communication unit 37.

The weighing unit 34 measures the weight of a good guided (housed) by the guide body 38. The weighing unit 34 measures the weight of the good, for example, using a weight detection method using a load cell.

The display unit 35 displays the purchase weight or the like to the customer. The display unit 35 is configured by four displays (display 35a, display 35b, display 35c, and display 35e). The display unit 35 (displays 35a to 35c and display 35e) may be, for example, a liquid crystal panel.

The display 35a displays the purchase weight (measured weight). Note that the display 35a may display information indicating that the display is being prepared as illustrated in FIG. 9C when a good is being released from the weighing device 30 into the container 320 (when the measured weight is not stable). The display 35b displays the unit price of the good to be purchased (the good housed in the goods supply device 300). The display 35c displays the purchase amount of the good for the purchase weight. Note that the display 35c may display information indicating that the display is being prepared as illustrated in FIG. 9A when a good is being released from the goods supply device 300 into the weighing device 30 (when the measured weight is not stable).

The display 35e displays the state of the weighing device 10. For example, the display 35e displays a mark such as that illustrated in FIG. 9A when a good is being released from the goods supply device 300 into the weighing device 30 (when the measured weight is not stable). Moreover, the display 35e displays a mark such as that illustrated in FIG. 9B when a good has been completely released from the goods supply device 300 into the weighing device 30 (when the measured weight is stable). Moreover, the display 35e displays a mark such as that illustrated in FIG. 9C when a good is being released from the weighing device 30 into the container 320 (when the measured weight is not stable).

Note that in the example illustrated in FIG. 9A, "50 (g)" is displayed on the display unit 35a, "400 (yen/100g)" is displayed on the display 25b, and information indicating that the display is being prepared is displayed on the display unit 25c. Moreover, in the example illustrated in FIG. 9B, "300 (g)" is displayed on the display 35a, "400 (yen/100g)" is displayed on the display 25b, and "1200 (yen)" is displayed on the display 25c. Moreover, in the example illustrated in FIG. 9C, information indicating that the display is being prepared is displayed on the display 35a, "400 (yen/100g)" is displayed on the display 25b, and "1200 (yen)" is displayed on the display 25c.

The communication unit 37 transmits and receives information to and from another device. For example, when all weighed goods have been released, the communication unit 37 transmits goods purchase information to the display printing device 40.

### (Housing and Weighing of Goods)

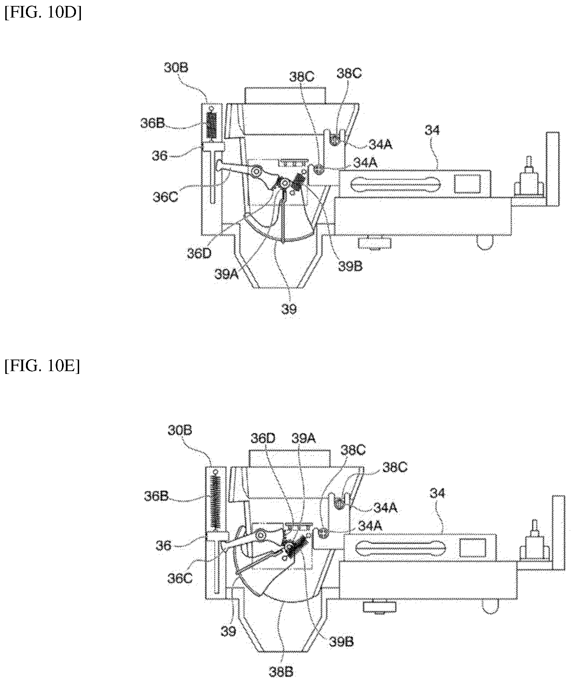

FIG. 10A is a side view of a guide body 38 side when the weighing device 30 is disassembled into a main body 30A side and the guide body 38 side, and illustrates when in a closed state. FIG. 10B is a side view of the guide body 38 side when the weighing device 30 is disassembled into the main body 30A side and the guide body 38 side, and illustrates when in an open state. FIG. 10C is a side view illustrating the internal structure of the main body 30A side when the weighing device 30 is disassembled into the main body 30A side and the guide body 38 side. FIG. 10D is a side view illustrating the internal structure of the weighing device 30, and illustrates when in the closed state. FIG. 10E is a side view illustrating the internal structure of the weighing device 30, and illustrates when in the open state.

As illustrated in FIG. 10A and FIG. 10B, the weighing device 30 is provided with the guide body 38, an operation transmission mechanism 36C, and the lid body 39. The guide body 38 has a receiving side opening 38A on the upper side, a releasing side opening 38B on the lower side, and an engaging projection 38C on the side surface. In FIG. 10A, a releasing side opening 38B is not illustrated because the releasing side opening 38B is covered by the lid body 39. FIG. 10A and FIG. 10B illustrate two engaging projections 38C provided on a side surface of one (where the operation transmission mechanism 36C is provided), but the guide body 38 also has two engaging projections 38C on the other side surface. The operation transmission mechanism 36C and the lid body 39 are provided around the guide body 38.

As illustrated in FIG. 10C, the display unit 35 and the goods release operation unit 36 are provided on a front surface plate 30B on the front surface of the main body 30A. The main body 30A has a hollow part 30C opened vertically behind the front surface plate 30B. The weighing unit 34 is provided behind the hollow part 30C of the main body 30A. The weighing unit 34 is provided with an engaging recess portion 34A on the hollow part 30C side. FIG. 10C illustrates two engaging recess portions 34A provided on a side surface of one, but the weighing unit 34 also has two engaging recess portions 34A on the other side surface.

The receiving side opening 38A of the guide body 38 is an opening for receiving a good released from the goods supply device 300. The releasing side opening 38B of the guide body 38 is an opening for releasing a good received by the receiving side opening 38A into the container 320. The releasing side opening 38B has a narrower opening width than the receiving side opening 38A. That is, the interior of the guide body 38 becomes gradually thinner from the receiving side opening 38A to the releasing side opening 38B as illustrated in FIG. 10A and FIG. 10B.

The lid body 39 operates according to the operation of the operation transmission mechanism 36C operating according to operation performed on the goods release operation unit 36. Specifically, the lid body 39 operates according to the operation of the operation transmission mechanism 36C (that is, an operation on the goods release operation unit 36) such that the operation transmission mechanism 36C is in a position covering the releasing side opening 38B (position that prevents the release of the goods from the releasing side opening 38B) when in the position illustrated in FIG. 10A (position where the tip is not depressed. The initial position), and the operation transmission mechanism 36C is in a position not covering the releasing side opening 38B (position that does not prevent the release of the goods from the releasing side opening 38B) when in the position illustrated in FIG. 10B (position where the tip is depressed). In other words, the weighing device 30 has a state in which goods cannot be released from the guide body 38 (releasing side opening 38B) (also referred to as a closed state or a housed state), and a state in which goods can be released from the guide body 38 (releasing side opening 38B) (also referred to as an open state or a releasing state), and both states (the closed state and open state) change depending on the operation of the goods release operation unit 36.

As illustrated in FIG. 10D and FIG. 10E, the weighing device 30 is used in a state wherein the guide body 38 and the like (the guide body 38, the operation transmission mechanism 36C, and the lid body 39) are fitted into the hollow part 30C of the main body 30A so the engaging recess portion 34A of the weighing unit 34 engages with the engaging projection 38C of the guide body 38. In the above state, the guide body 38 and the like are supported by the weighing unit 34 (engaging recess portion 34A) so that the total weight (including the weight of the housed goods when goods are housed in the guide body 38) is measured by the weighing unit 34. As a result, the weight of the good housed in the guide body 38 is measured by the weighing unit 34. The weighing device 30 may store the weight of the guide body 38 and the like as the tare weight, so that when no goods are housed in the guide body 38, the display unit 35 (display 35a) may display zero as the purchase weight (measured weight). Note that the engagement between the engaging projection 38C and the engaging recess portion 34A can be released (the guide body 38 and the like can be attached and detached from the main body 30A).

The goods release operation unit 36 is operated from one end side (the outside of the front surface plate 30B) as illustrated in FIG. 8 and FIG. 9A to FIG. 9C. The other end side (the hollow part 30C side) of the goods release operation unit 36 projects toward the hollow part 30C side. The goods release operation unit 36 is energized upward by a spring 36B. When the goods release operation unit 36 is in a not depressed state (not operated state. In the initial state), contact is not made with the operation transmission mechanism 36C (the operation transmission mechanism 36C is not depressed) as illustrated in FIG. 10D. When the goods release operation unit 36 is in a depressed state (operated state), contact is made with the operation transmission mechanism 36C and the operation transmission mechanism 36C is depressed as illustrated in FIG. 10E.

A sector gear (sector gear) 36D is formed on one end on the inner side of the operation transmission mechanism 36C. The lid body 39 operates according to the rotation of a gear part 39A around the gear part 39A. The sector gear 36D and the gear part 39A are engaged with each other. Moreover, the lid body 39 is energized by the spring 39B so as to cover the releasing side opening 38B (to prevent the releasing of the good from the releasing side opening 38B).

As illustrated in FIG. 10D, when the goods release operation unit 36 is not depressed, the lid body 39 cannot obtain a rotational force from the operation transmission mechanism 36C (sector gear 36D), and therefore takes a posture that covers the releasing side opening 38B (prevents release of the goods from the releasing side opening 38B) by the energizing force of the spring 39B. Meanwhile, as illustrated in FIG. 10E, when the goods release operation unit 36 is being depressed, the lid body 39 goes against the energizing force of the spring 39B due to a rotational force from the operation transmission mechanism 36C (sector gear 36D) and takes a posture that does not cover the releasing side opening 38B (does not prevent the release of goods from the releasing side opening 38B). That is, the articles received from the receiving side opening 38A are housed in the guide body 38 until the goods release operation unit 36 is operated, and released from the releasing side opening 38B in response to operation of the goods release operation unit 36.

### (Display Printing Device 40)

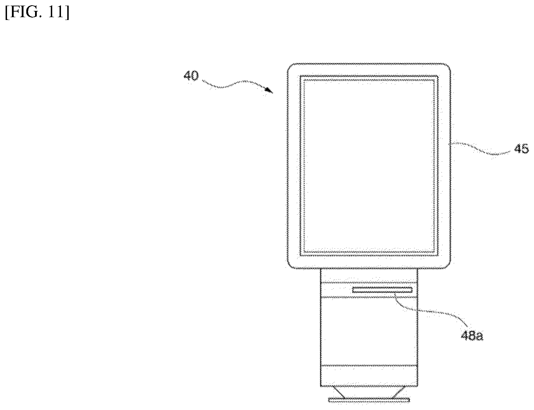

FIG. 11 is an example of the appearance and the like of a display printing device 40. Although a configuration diagram is not illustrated, the display printing device 40 is provided with a CPU, a ROM, a RAM, a display unit, a communication unit, and a printing unit. Hereinafter, the CPU, ROM, RAM, display unit, communication unit, and printing unit provided in the display printing device 40 will be referred to as a CPU 41, a ROM 42, a RAM 43, a display unit 45, a communication unit 47, and a printing unit 48, respectively. These are connected to each other via a bus.

The CPU 41 controls the operation of the display printing device 40 by reading and executing a program stored in the ROM 42. For example, the CPU 41 controls the display by the display unit 45. Moreover, the CPU 41 controls the printing and issuing of labels by the printing unit 48.

The ROM 42 is a read-only memory, and stores various information used by the CPU 41, including programs, for example. The RAM 43 is a read/write memory, and stores various information such as information read from the ROM 42, information processed (calculated, generated, updated, or the like) by the CPU 41, information referenced by the CPU 41 in the above processing, information obtained via the communication unit 47, and unit price of each good. For example, the RAM 43 stores the good (good name), unit price, image, and the like of goods measured by each weighing device (goods housed in the goods supply device corresponding to each weighing device) in association with device identification information of each weighing device.

The display unit 45 may be, for example, a liquid crystal touch panel. The display unit 45 displays various information to the customer and receives an operation from the customer. For example, the display unit 45 displays a good selection screen (product selection screen) having good buttons (product buttons) disposed thereon for selecting (designating) a good for which a label is to be printed and issued, a label issuance instruction screen for accepting instructions to print and issue labels, and the like.

The communication unit 47 transmits and receives information to and from another device. For example, the communication unit 47 receives goods purchase information from the respective weighing devices. The printing unit 48 prints and issues labels based on operation by the customer (for example, operation on a label issuance instruction screen). FIG. 11 illustrates a label issue port 48a.

The display printing device 40 is provided with a sensor that detects when a label printed and issued by the printing unit 48 is removed from the label issue port 48a (when the customer receives the label from the label issue port 48a).

(Operation of Weighing Device with Decrease in Measured Weight as Purchase Weight)

The weighing device 10 of the first weighing unit 4A calculates the decrease in the measured weight as the purchased weight of the goods. A transaction in the first weighing unit 4A begins when a good is removed from the goods supply device 100 into the container 120 while in the customer waiting state, and ends when the operation unit 16 of the weighing device 10 is operated. The weighing device 10 calculates a weight obtained by subtracting the measured weight after a transaction is complete (the stable measured weight while operating the operation unit 16) from the measured weight before starting the transaction (the reference weight) as the purchase weight.

Generally, a transaction in the first weighing unit 4A begins when a good is removed from the goods supply device 100 into the container 120 while in the customer waiting state, so the measured weight from the weighing device 10 decreases from the reference weight (measured weight before a transaction has started) (is less than the reference weight). However, when an item is inserted (returned) into the goods supply device 100 in the customer waiting state, measured weight from the weighing device 10 increases from the reference weight (becomes greater than the reference weight).

When the measured weight of the weighing device 10 increases from the reference weight, the purchase weight calculated by the weighing device 10 becomes a negative value, so the original purchase amount cannot be calculated. For example, in a situation wherein a next customer B removes a good from the goods supply device 100 after a customer A has returned a good into the goods supply device 100 and left, the purchase amount of customer B becomes negative when the weight of the good removed by customer B is less than the weight of the good returned by customer A, the purchase amount of customer B becomes zero when the weight of the good removed by customer B is equal to the weight of the good returned by customer A, and the purchase amount of customer B is less expensive to an extent equal to the weight of the good returned by customer A when the weight of the good removed by customer B is greater than the weight of the good returned by customer A.

Therefore, in the first weighing unit 4A, an increase in the measured weight from the customer waiting state is determined to be an abnormal state, and the abnormal state is notified to a employee so that the employee can resolve the abnormal state.

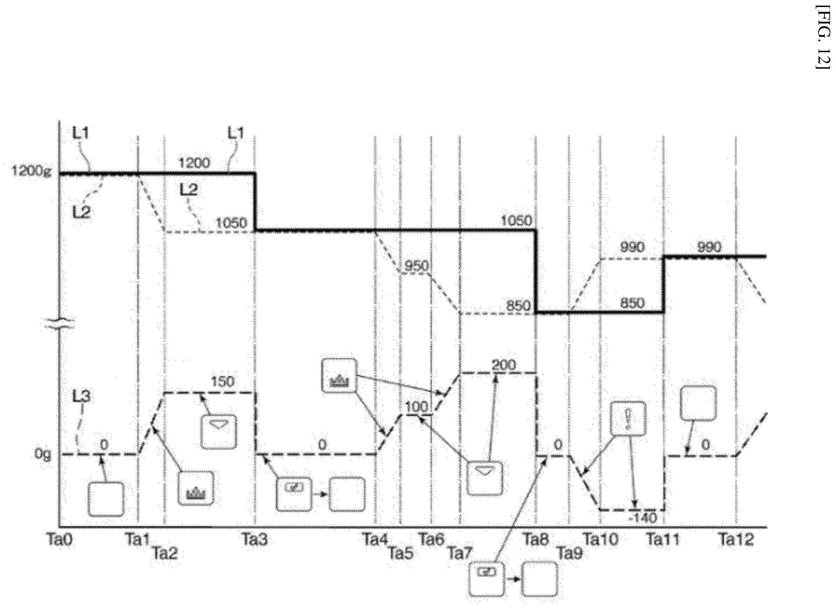

FIG. 12 is a descriptive diagram for describing a transition and the like of a reference weight, a measured weight, and a purchase weight in the weighing device 10. In FIG. 12, the horizontal axis represents the flow of time (time). In the drawing, the vertical axis represents weight (weight value). In the drawing, a thick solid line L1 represents the reference weight, a thin solid line L2 represents the measured weight, and a dashed line L3 represents the purchase weight. Appropriate weights are indicated by numbers above the respective lines (thick solid line L1, thin solid line L2, dashed line L3). Note that for convenience, the diagonal portions of each line (portions where the value increases or decreases) are shown as straight lines. Furthermore, in the same drawing, a state (status) of the weighing device 10 displayed by the display 15e is also illustrated.

Each time indicates the following:
Times Ta0 to Ta1: Customer waiting state time
Ta1 to Ta3: Transaction in progress (normal)
Times Ta3 to Ta4: Customer waiting state
Times Ta4 to Ta8: Transaction in progress (normal)
Times Ta8~Ta9: Customer waiting state
Times Ta9 to Ta11: Transaction in progress (abnormal)
Times Ta11 to Ta12: Customer waiting state

The reference weight, measured weight, purchase weight, and the like at each time during normal transactions will be described using the transactions at Ta4 to Ta8 as examples.

Times Ta4 to Ta5: As goods are removed from the goods supply device 100 into the container 120, the measured weight decreases and the purchase weight increases. The reference weight does not change between times Ta4 and Ta5. Therefore, from time Ta4 to time Ta5, the measured weight is less than the reference weight.

Times Ta5 to Ta6: After the goods are removed from the goods supply device 100 into the container 120; the measured weight and the purchase weight are stable. The reference weight does not change between times Ta5 and Ta6. Therefore, from time Ta5 to time Ta6, the measured weight is less than the reference weight.

Times Ta6 to Ta7: As goods are removed from the goods supply device 100 into the container 120, the measured weight decreases and the purchase weight increases. The reference weight does not change between times Ta6 and Ta7. Therefore, from time Ta6 to time Ta7, the measured weight is less than the reference weight.

Times Ta7 to Ta8: After the goods are removed from the goods supply device 100 into the container 120; the measured weight and the purchase weight are stable. The reference weight does not change between times Ta7 and Ta8. Therefore, from time Ta7 to time Ta8, the measured weight is less than the reference weight.

Time Ta8: The reference weight is updated (reference weight <- measured weight) by operating the operation unit 16. The reference weight and the measured weight became equal due to the reference weight being updated (reference weight <- measured weight), so the purchase weight is zero.

The reference weight, measured weight, purchase weight, and the like at each time during abnormal transactions will be described using the transactions at Ta9 to Ta11 as examples.

Times Ta9 to Ta10: As goods are inserted into the goods supply device 100, the measured weight increases and the purchase weight decreases. The reference weight does not change between times Ta9 and Ta10. Therefore, from time Ta9 to time Ta10, the measured weight is greater than the reference weight.

Times Ta10 to Ta11: After the goods are inserted into the goods supply device 100; the measured weight and the purchase weight are stable. The reference weight does not change between times Ta10 and Ta11. Therefore, from time Ta10 to time Ta11, the measured weight is greater than the reference weight.

Time Ta11: The reference weight is updated (reference weight <- measured weight) by an operation by an employee to resolve an abnormal state (purchase weight reset operation described below). The reference weight and the measured weight became equal due to the reference weight being updated (reference weight <- measured weight), so the purchase weight is zero.

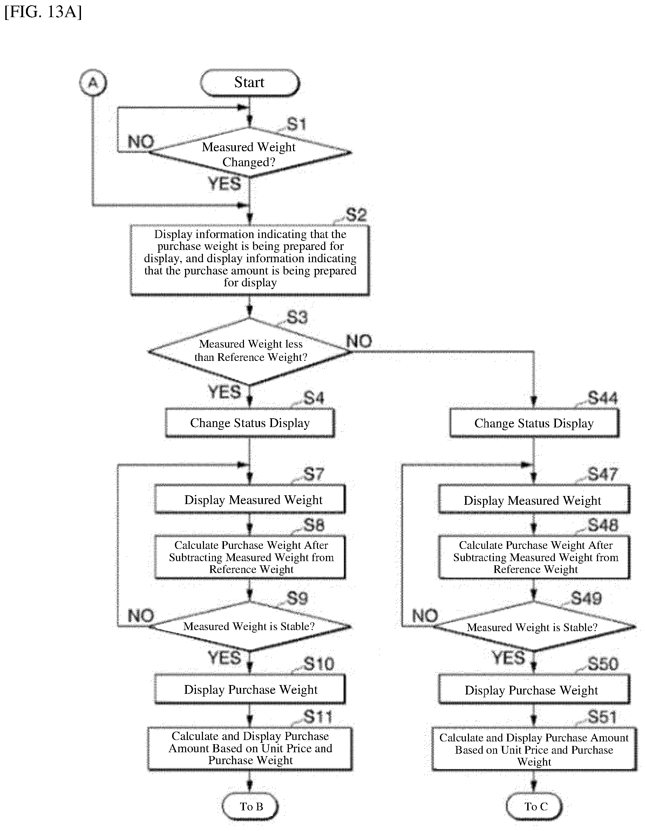

FIG. 13A to FIG. 13C are flowcharts illustrating an example of an operation of the weighing device 10. The weighing device 10 executes the process of the flowchart in FIG. 13A while in the customer waiting state. Note that the weighing device 10 does not display anything as illustrated in FIG. 12 (times Ta0 to Ta1) as a display of status (display of the display 15e) in the customer waiting state.

### (Flowchart of FIG. 13A)

Step S1: The weighing device 10 determines whether the measured weight has changed. When the measured weight has changed, the flow then proceeds to step S2.

Step S2: The weighing device 10 displays information indicating that the purchase weight is being prepared for display, and displays information indicating that the purchase amount is being prepared for display. Next, the flow then proceeds to step S3.

Step S3: The weighing device 10 determines whether the measured weight is less than the reference weight. That is, the weighing device 10 determines whether the goods are removed from the goods supply device 100 or whether the goods are inserted into the goods supply device 100. When the measured weight is less than the reference weight (when the goods are removed from the goods supply device 100), the flow proceeds to step S4. When the measured weight is greater than the reference weight (when the goods are inserted into the goods supply device 100), the flow proceeds to step S44.

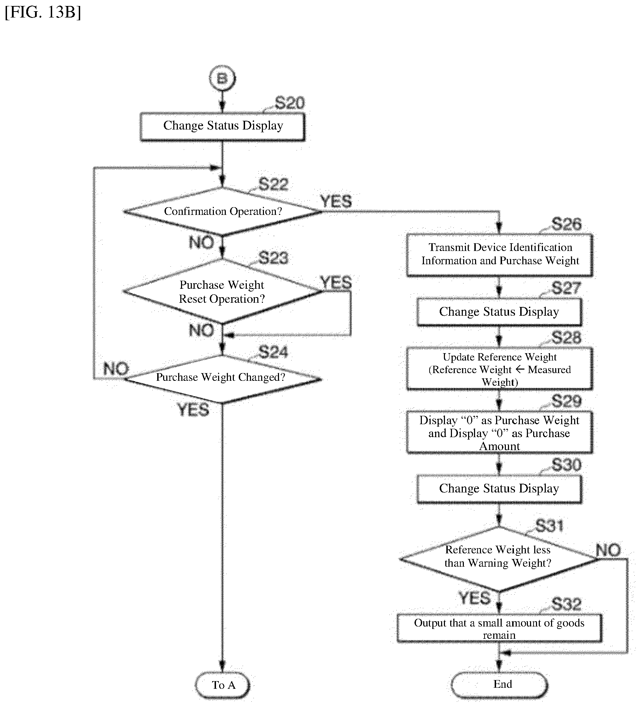

Note that when it is determined that the measured weight has changed (step S1 (YES)), the determination of step S3 is executed following the display in step S2, but the determination process in step S3 may be executed after a predetermined amount of time has passed since it was determined in step S1 that the measured weight has changed. The predetermined amount of time may be around one-tenth to one-half of X, X being the average time required from the change of the measured weight until the measured weight stabilizes. The same is true when it is determined that the measured weight has changed in step S24 in FIG. 13B (step S24 (YES)) and the determination in step S3 is executed again.

The process from step S4 onwards is the normal process. The process from step S44 onwards is the abnormal process.

### (Normal Processing)

Step S4: The weighing device 10 changes the display of the status. Specifically, the weighing device 10 displays a mark such as that illustrated in FIG. 5A on the display 15e. Next, the flow then proceeds to step S7.

Step S7: The weighing device 10 displays the measured weight on the display 15d. Next, the flow then proceeds to step S8.

Step S8: The weighing device 10 calculates the purchase weight by subtracting the measured weight from the reference weight. Note that the purchase weight calculated in step S8 becomes a positive value. Next, the flow then proceeds to step S9.

Step S9: The weighing device 10 determines whether the measured weight is stable. When the measured weight is stable, the flow then proceeds to step S10. When the measured weight is not stable, the flow proceeds to step S7.

Step S10: The weighing device 10 displays the purchase weight on the display 15a. That is, the weighing device 10 displays the purchase weight calculated in the last executed step S8. Next, the flow then proceeds to step S11.

Step S11: The weighing device 10 calculates the purchase amount based on the unit price and the purchase weight and displays on the display 15c. Note that the purchase amount calculated in step S11 becomes a positive value. Next, the flow then proceeds to step S20 of FIG. 13B.

### (Flowchart of FIG. 13B)

Step S20: The weighing device 10 changes the display of the status. Specifically, the weighing device 10 displays a mark such as that illustrated in FIG. 5B on the display 15e. Next, the flow then proceeds to step S22.

Step S22: The weighing device 10 determines whether there has been a confirmation operation. Specifically, the weighing device 10 determines whether there is an operation (normal depression) of the operation unit 16. The customer confirms the purchase weight and the purchase amount, and when there is no problem, operates the operation unit 16 as a confirmation operation. When a confirmation operation has been performed, the flow proceeds to step S26. Where there has been no confirmation operation, the flow proceeds to step S23.

Step S23: The weighing device 10 determines whether there has been a purchase weight reset operation. The purchase weight reset operation is an operation that an employee performs in the event of an abnormality (when the determination in step S3 is NO). In the event of an abnormality, the employee, for example, performs a special operation (for example, operating a hidden button or the like) on the operation unit 16 as an operation to reset the purchase weight. Because the situation in step S23 is not an abnormal situation, the flow proceeds to step S24 regardless of whether the purchase weight has been reset. In other words, the weighing device 10 ignores the purchase weight reset operation.

Step S24: The weighing device 10 determines whether the measured weight has changed. When the measured weight has changed, the flow then proceeds to step S2 in FIG. 13A. When the measured weight has not changed, the flow proceeds to step S22.

Step S26: The weighing device 10 transmits goods purchase information (device identification information of the weighing device 10 and the purchase weight) to the display printing device 40. Next, the flow then proceeds to step S27.

Step S27: The weighing device 10 changes the display of the status. Specifically, the weighing device 10 displays, on the display 15e, a mark (check mark illustrated at times Ta3 and Ta8 in FIG. 12) indicating that the goods purchase information has been transmitted to the display printing device 40. Next, the flow then proceeds to step S28.

Step S28: The weighing device 10 updates the reference weight. Specifically, the weighing device 10 stores the measured weight as the reference weight. That is, the weighing device 10 stores the post-transaction stable weight as a new reference weight for the next transaction in a storage unit (RAM 13). Next, the flow then proceeds to step S29.

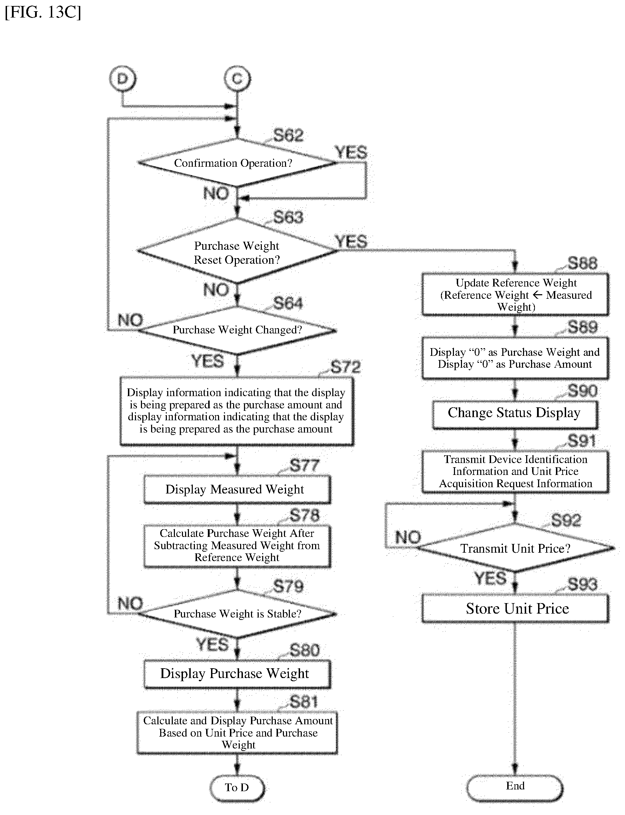

Step S29: The weighing device 10 displays zero as the purchase weight on the display 15a and displays zero as the purchase amount on the display 15c. Next, the flow then proceeds to step S30. Note that the weighing device 10 may calculate the purchase weight by subtracting the measured weight from the reference weight and display on the display 15a, similar to step S8 in FIG. 13A. However, because the reference weight and the measured weight are now equal to each other due to the process in step S28, calculation is skipped. Similarly, the weighing device 10 may calculate the purchase amount based on the unit price and the purchase weight and display on the display 15c, similar to step S11 in FIG. 13A. However, because the reference weight and the measured weight are now equal to each other due to the process in step S28, calculation is skipped. The same is true in step S89 in FIG. 13C. Step S30: The weighing device 10 changes the display of the status. Specifically, the weighing device 10 updates to the mark in the customer waiting state as a display on the display 15e, that is, displays nothing as illustrated at times Ta3 to Ta4 or times Ta8 to Ta9 in FIG. 12. Next, the flow then proceeds to step S31.

Step S31: The weighing device 10 determines whether the reference weight (or measured weight) is less than a predetermined warning weight. In other words, the weighing device 10 determines whether the weight (remaining weight) of the good housed in the goods supply device 100 has become so low as to warrant a warning. When less than the warning weight, the flow proceeds to step S32. When not less than the warning weight, this flowchart ends (returns to step S1 of FIG. 13A).

Step S32: The weighing device 10 outputs that the remaining good is small. For example, the weighing device 10 transmits warning information indicating that there is little of the remaining good (device identification information of the weighing device 10 and code information indicating that there is little of the remaining good) to a terminal used by the employee (for example, a POS terminal used by the employee or a smartphone or tablet terminal used by the employee and the like. Hereinafter sometimes referred to as the employee terminal). The weighing device 10 may transmit the warning information to the display printing device 40 instead of or in addition to transmission to the employee terminal. This flowchart then ends (returns to step S1 of FIG. 13A).

Note that in step S32, the weighing device 10 may output, from an audio output unit, a warning sound indicating that there is little of the remaining good instead of or in addition to transmitting the warning information to the employee terminal or the display printing device 40. The weighing device 10 stops outputting the warning sound when the goods supply device 100 is replenished with the good and the reference weight is no longer less than the warning weight.

### (Abnormal Processing)

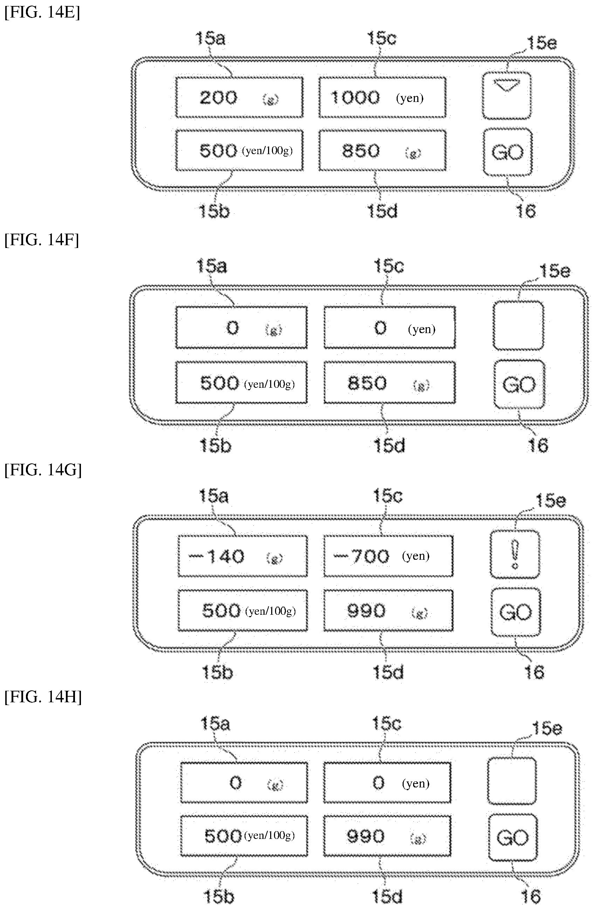

Step S44: The weighing device 10 changes the display of the status. Specifically, the weighing device 10 displays a mark such as that illustrated at times Ta9 to Ta11 in FIG. 12 (a mark such as that illustrated in FIG. 14G) on the display 15e. Next, the flow then proceeds to step S47.

Step S47: The weighing device 10 displays the measured weight on the display 15d. Next, the flow then proceeds to step S48.

Step S48: The weighing device 10 calculates the purchase weight by subtracting the measured weight from the reference weight. Note that the purchase weight calculated in step S48 becomes a negative value. Next, the flow then proceeds to step S49.

Step S49: The weighing device 10 determines whether the measured weight is stable. When the measured weight is stable, the flow then proceeds to step S50. When the measured weight is not stable, the flow proceeds to step S47.

Step S50: The weighing device 10 displays the purchase weight on the display 15a. That is, the weighing device 10 displays the purchase weight calculated in the last executed step S48. Next, the flow then proceeds to step S51.

Step S51: The weighing device 10 calculates the purchase amount based on the unit price and the purchase weight and displays on the display 15c. Note that the purchase amount calculated in step S51 becomes a negative value. Next, the flow then proceeds to step S62 of FIG. 13C.

### (Flowchart of FIG. 13C)

Step S62: The weighing device 10 determines whether there has been a confirmation operation. The confirmation operation is an operation that is performed under normal circumstances. Because the situation in step S62 is not a normal situation, the flow proceeds to step S63 regardless of whether there has been a confirmation operation. In other words, the weighing device 10 ignores the confirmation operation.

Step S63: The weighing device 10 determines whether there has been a purchase weight reset operation. When a purchase weight reset operation has been performed, the flow proceeds to step S88. Where there has been no purchase weight reset operation, the flow proceeds to step S64.

Step S64: The weighing device 10 determines whether the measured weight has changed. When the measured weight has changed, the flow then proceeds to step S72. When the measured weight has not changed, the flow proceeds to step S62.

Note that when a certain customer inserts a good into the goods supply device 100 and the customer or another customer who appeared after the customer left inserts a good into the goods supply device 100 before the purchase weight reset operation is performed, or when a certain customer inserts a good into the goods supply device 100 and the customer or another customer who appeared after the customer left removes the good from the goods supply device 100 before the purchase weight reset operation is performed, the process proceeds to step S72.

Step S72: The weighing device 10 displays information indicating that the purchase weight is being prepared for display, and displays information indicating that the purchase amount is being prepared for display. Next, the flow then proceeds to step S77.

Step S77: The weighing device 10 displays the measured weight on the display 15d. Next, the flow then proceeds to step S78.

Step S78: The weighing device 10 calculates the purchase weight by subtracting the measured weight from the reference weight. Next, the flow then proceeds to step S79.

Step S79: The weighing device 10 determines whether the measured weight is stable. When the measured weight is stable, the flow then proceeds to step S80. When the measured weight is not stable, the flow proceeds to step S77.

Step S80: The weighing device 10 displays the purchase weight on the display 15a. That is, the weighing device 10 displays the purchase weight calculated in the last executed step S78. Next, the flow then proceeds to step S81.

Step S81: The weighing device 10 calculates the purchase amount based on the unit price and the purchase weight and displays on the display 15c. Next, the flow then returns to step S62.

Note that because the processes of steps S72 to S81 after step S64 (YES) are some of the abnormal processes, a determination of whether the measured weight is less than the reference weight (a determination similar to that in step S3 in FIG. 13A) and updating of the status (a change in the status similar to that in step S4 in FIG. 13A) are not performed. When proceeding to step S72 due to the removal of a good from the goods supply device 100, there is a chance that the measured weight will be less than the reference weight, but even when the measured weight is less than the reference weight, the abnormal processes will continue (returning to step S62), so there is no longer any need to determine whether the measured weight is less than the reference weight or update the status.

Step S88: The weighing device 10 updates the reference weight. Specifically, the weighing device 10 stores the measured weight in a storage unit (RAM 13) as the reference weight. Next, the flow then proceeds to step S89.

Step S89: The weighing device 10 displays zero as the purchase weight on the display 15a and displays zero as the purchase amount on the display 15c. Next, the flow then proceeds to step S90.

Step S90: The weighing device 10 changes the display of the status. Specifically, the weighing device 10 updates to the mark in the customer waiting state as a display on the display 15e, that is, displays nothing as illustrated at times Ta11 to Ta12 in FIG. 12. Next, the flow then proceeds to step S91.

Step S91: The weighing device 10 transmits unit price acquisition request information that requests a unit price of a good (for example, device identification information of the weighing device 10 and code information indicating that transmission of the unit price to the device is requested) to the display printing device 40. Note that the display printing device 40, having received the unit price acquisition request information, references the storage unit (RAM 43), defines the stored unit price in association with the device identification information, and transmits response information including the defined unit price to the weighing device 10 that made the request.

Step S92: The weighing device 10 determines whether or not the unit price (response information) is received. When the unit price is received, the flow proceeds to step S93. When no unit price is received, the process in step S92 is repeatedly executed.

Step S93: The weighing device 10 stores the unit price in the storage unit. This flowchart then ends (returns to step S1 of FIG. 13A).

Note that the weighing device 10 may transmit warning information (device identification information of the weighing device 10 and code information indicating an abnormal state) indicating an abnormal state (state wherein the measured weight exceeds the reference weight) to the employee terminal during abnormal processing (processing from step S44 onwards when it is determined that the measured weight exceeds the reference weight (step S3 (NO))). For example, when it is determined that the measured weight exceeds the reference weight (step S3 (NO)), the weighing device 10 may transmit the warning information to the employee terminal. The weighing device 10 may transmit the warning information to the employee terminal when the measured weight exceeding the reference weight stabilizes (step S49 (YES)). The weighing device 10 may transmit the warning information to the employee terminal when a confirming operation has been performed when the measured weight (measured weight exceeding the reference weight) is stable (step S62 (YES)).

The weighing device 10 may transmit warning information indicating that an inappropriate operation has occurred (purchase weight reset operation when a measured weight that does not exceed the reference weight is stable) (device identification information of the weighing device 10 and code information indicating the above) to the employee terminal when a purchase weight reset operation has occurred (step S23 (YES)) while the measured weight (measured weight that does not exceed the reference weight) is stable in normal processing (processing from step S4 onward when it is determined that the measured weight does not exceed the reference weight (step S3(YES))).

The weighing device 10 may be configured to accept an operation to reset the purchase weight in the customer waiting state (state wherein (step S1 (NO)) is repeatedly executed). The weighing device 10 may execute the processes in step S88 to step S93 similar to when a purchase weight reset operation has been performed when the measured weight (measured weight exceeding the reference weight) is stable (step S63 (YES)) when a purchase weight reset operation is performed in the customer waiting state. However, since the situation does not change before and after the processes in step S88 to step S90, the processes in step S88 to step S90 may be omitted and the processes in step S91 to step S93 may be executed instead. Thus, the weighing device 10 can request and acquire the unit price information based on the operation of the employee in the customer waiting state. Note that the weighing device 10 may execute the processes in step S91 to step S93 without relying on an operation by an employee (for example, when the power is being started).

Note that according to the flowcharts in FIG. 13A to FIG. 13C, when a portion of the goods removed after the customer removed the goods from the goods supply device 100 is returned into the goods supply device 100, the normal process is continuously executed (step S24 (YES) in FIG. 13B → step S3 (YES) in FIG. 13A → step S4, ...), but when all of the goods removed after the customer removed the goods from the goods supply device 100 are returned into the goods supply device 100, the flowchart above is omitted, but the process may be ended (returned to step S1).

Furthermore, in the weighing device 10, the employee may perform a zero reset operation, which is a separate operation from the purchase weight reset operation. The zero reset operation is a predefined special operation (for example, the operation of pressing a button that exists in the back of a small hole (about 3 mm) provided in the housing using a thin rod (needle or the like)). The zero reset operation is performed after the goods supply device 100 is removed from the weighing device 10. When the goods supply device 100 is removed from the weighing device 10, the purchase weight becomes a large positive value including the weight of the goods supply device 100, and the purchase amount also becomes a large positive value. When the zero reset operation is performed in this state, the weighing device 10 resets the purchase weight, the purchase amount, and the reference weight to zero. Thereafter, when the employee places a goods supply device 100 (for example, a goods supply device 100 that has new goods inserted therein or a goods supply device 100 in which goods have been refilled) on the weighing device 10, the purchase weight becomes a large negative value including the weight of the goods supply device 100, and the purchase amount also becomes a large negative value. This state is similar to the abnormal situation described above. Accordingly, in this state, if the employee performs the purchase weight reset operation, the purchase weight and the purchase amount are reset to zero, and the reference weight becomes the original weight (the measured weight of the goods supply device 100 that has new goods inserted therein or the measured weight of the goods supply device 100 in which goods have been refilled).

The zero reset operation and the purchase weight reset operation are very simple operations as setting operations when changing the good. Moreover, because the unit price is acquired from the display printing device 40 in the purchase weight reset operation, there is no need for an operation for newly setting the unit price of a changed good when changing the good, solving the problem of forgetting to set the unit price of the changed good.

Note that in the flowchart above, it was described that the weighing device 10 calculates the purchase weight in steps S8, S48, and S78, and that the purchase weight may be calculated when displaying in step S29 (step S89), but the weighing device 10 may also calculate the purchase weight as appropriate in other situations than those described above.

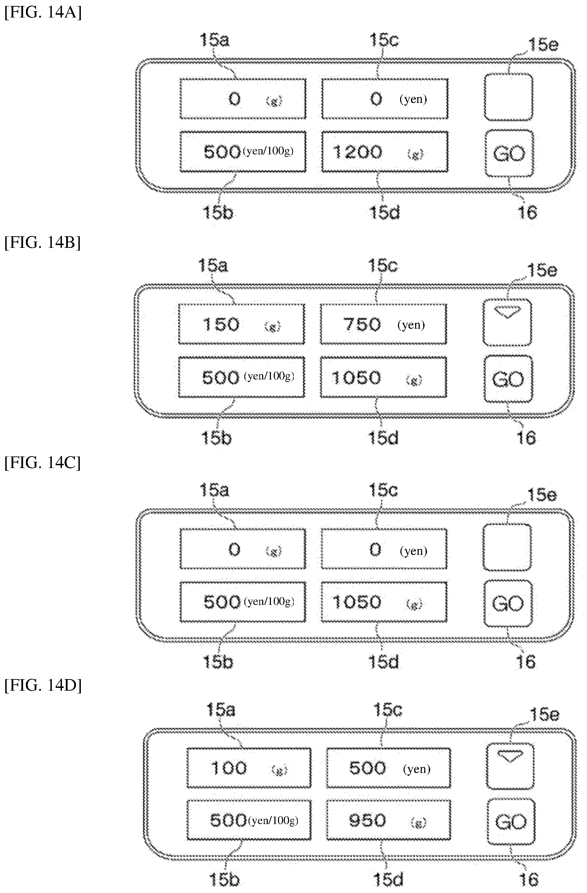

FIG. 14A to FIG. 14H is a display example on the display unit 15 of the weighing device 10. FIG. 14A is a display example of the display unit 15 at times Ta0 to Ta1 in FIG. 12. Note that at times Ta0 to Ta1, the weighing device 10 repeatedly executes step S1 (NO) in FIG. 13A. FIG. 14B is a display example of the display unit 15 at times Ta2 to Ta3. Note that at times Ta2 to Ta3, the weighing device 10 repeatedly executes step S22 to step S24 in FIG. 13B. FIG. 14C is a display example of the display unit 15 at times Ta3 to Ta4. Note that at times Ta3 to Ta4, the weighing device 10 repeatedly executes step S1 (NO) in FIG. 13A. FIG. 14D is a display example of the display unit 15 at times Ta5 to Ta6. Note that at times Ta5 to Ta6, the weighing device 10 repeatedly executes step S22 to step S24 in FIG. 13B. FIG. 14E is a display example of the display unit 15 at times Ta7 to Ta8. Note that at times Ta7 to Ta8, the weighing device 10 repeatedly executes step S22 to step S24 in FIG. 13B. FIG. 14F is a display example of the display unit 15 at times Ta8 to Ta9. Note that at times Ta8 to Ta9, the weighing device 10 repeatedly executes step S1 (NO) in FIG. 13A. FIG. 14G is a display example of the display unit 15 at times Ta10 to Ta11. Note that at times Ta10 to Ta11, the weighing device 10 repeatedly executes step S62 to step S64 in FIG. 13C. FIG. 14H is a display example of the display unit 15 at times Ta11 to Ta12. Note that at times Ta11 to Ta12, the weighing device 10 repeatedly executes step S1 (NO) in FIG. 13A.

The operation of the weighing device in which the decrease of the measured weight is regarded as the purchase weight has been described above using the first weighing unit 4A as an example, but the same applies to the second weighing unit 4B. Note that with the second weighing unit 4B, because the configuration is such that the good (liquid) is not easily returned into the goods supply device 200 (see FIG. 1), situations wherein the measured weight from the weighing device 20 in the second weighing unit 4B increases from the reference weight are fewer than situations wherein the measured weight from the weighing device 10 increases from the reference weight in the first weighing unit 4A.

### (Operation of Display Printing Device 40)

The display printing device 40 receives the goods purchase information (device identification information and purchase weight) transmitted from the weighing device (weighing device 10, weighing device 20, or weighing device 30). When the display printing device 40 receives the above information from a certain weighing device, it displays on the display unit 45 a good button for the good weighed by that weighing device. When a customer selects a good button and gives instruction to issue a label, the display printing device 40 prints and issues a label corresponding to the item button. That is, a customer who has finished weighing the good in the weighing device moves to the display printing device 40, selects the good button of the good on the display printing device 40, and receives the label of the good printed and issued from the display printing device 40.

When a customer performs a plurality of transactions on the same weighing device, the display printing device 40 displays a plurality of good buttons of the same good. For example, when the customer, after completing the transaction on a certain weighing device 10 (after operating the operation unit 16), feels that the purchase amount is insufficient and performs the transaction again on the weighing device 10 for the additional purchase without moving to the display printing device 40, the display printing device 40 displays two good buttons of the same good. The same is true when additional purchases are made on the weighing device 20 or the weighing device 30. Furthermore, because the weighing device 30 has an upper limit to the amount of goods that can be measured in one transaction due to problems such as the capacity of the guide body 38, a plurality of transactions are required when purchasing a large amount of goods housed in the goods supply device 300. Even in such a case, the display printing device 40 displays a plurality of good buttons of the same good. As described above, when the display printing device 40 displays a plurality of good buttons of the same good, the customer must operate the respective good buttons of the same good on the display printing device 40.

Therefore, the display printing device 40 is configured to group the good buttons of the same good into one good button as appropriate.

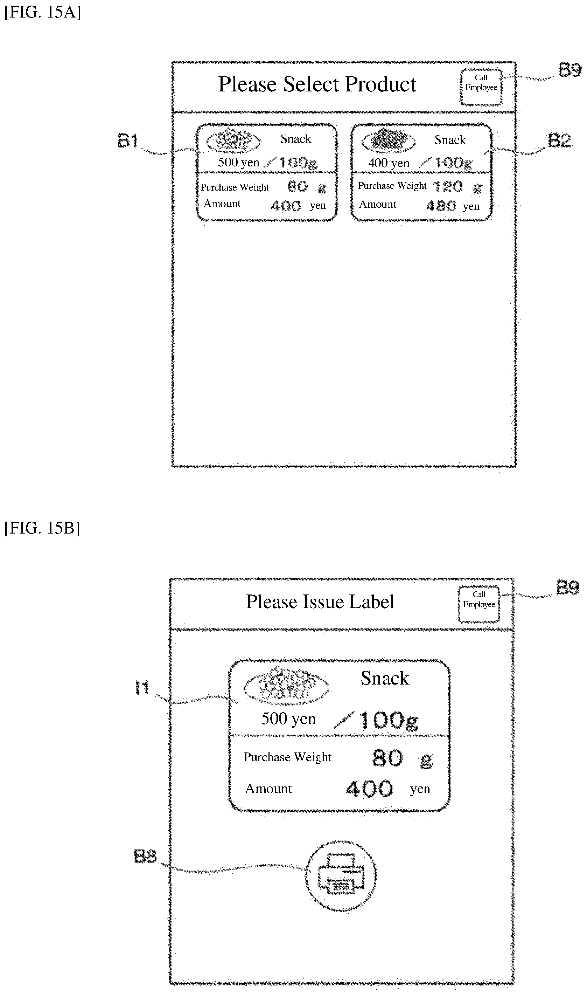

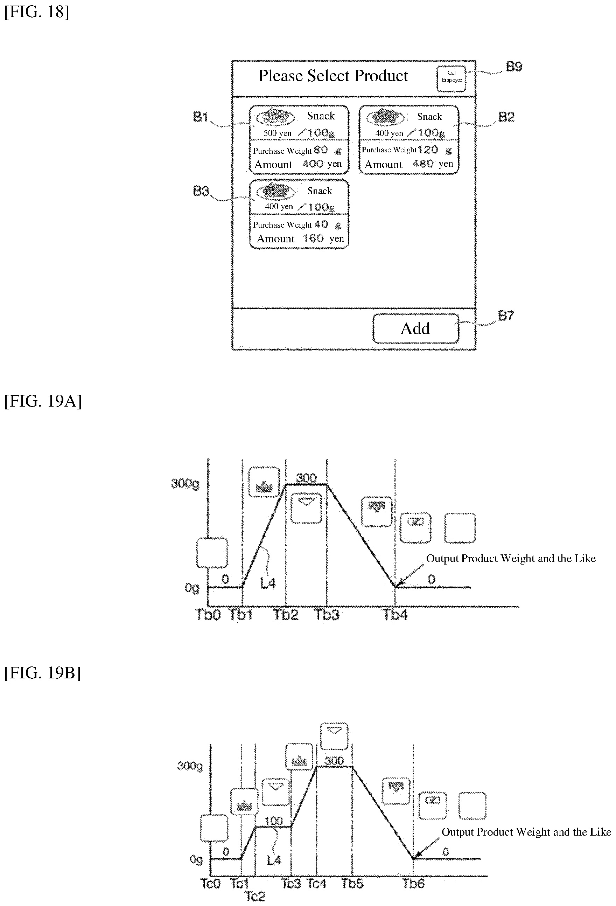

FIG. 15A to FIG. 16D is an example of display on the display unit 45 of the display printing device 40. Note that in the descriptions of FIG. 15A to FIG. 16D (also true for FIG. 18), the weight of a snack A (unit price is 500 yen/100 g) is measured by the weighing device 10-1, and the weight of a snack B (unit price is 400 yen/100 g) is measured by the weighing device 10-2.

The display printing device 40 displays the goods selection screen such as that illustrated in FIG. 15A when device identification information and purchase weight (80g) are received as the goods purchase information from the weighing device 10-1 and the device identification information and purchase weight (120g) are received as the goods purchase information from the weighing device 10-2. The goods selection screen illustrated in FIG. 15A displays a good button B 1 based on information received from the weighing device 10-1, and a good button B2 based on information received from the weighing device 10-2. On the good button B 1, an image of the good, the good name "snack A", the unit price (500 yen/100 g), the purchase weight (80 g) and an amount (400 yen) are displayed. On the good button B2, an image of the good, the good name "snack B", the unit price (400 yen/100 g), the purchase weight (120 g) and an amount (480 yen) are displayed. Note that on the good buttons, the purchase amount is simply used as the amount.

As described above, the display printing device 40 stores goods (names of goods), unit prices, and images in association with the device identification information. Therefore, for example, the display printing device 40 defines the good name (snack A), the unit price (500 yen/100 g), and the image of the good weighed by the weighing device 10-1 based on the device identification information transmitted from the weighing device 10-1. Furthermore, the display printing device 40 calculates the purchase amount (400 yen) from the unit price (500 yen/100 g) defined as described above and the purchase weight (80g) transmitted from the weighing device 10-1. The display printing device 40 displays the good name (snack A), the unit price (500 yen/100 g), and the image defined as described above, the purchase weight (80g) transmitted from the weighing device 10-1, and the purchase amount calculated as described above on the good button B1.

Note that information (image and purchase amount) different from the information (device identification information and purchase weight) transmitted from the weighing device is displayed on the good buttons as the goods purchase information. That is, the display printing device 40 displays the good buttons based on the goods purchase information (device identification information and purchase weight) transmitted from the weighing device, but displays information (image or the like) different from the information transmitted from the weighing device (device identification information and purchase weight) on the good buttons. Moreover, the good buttons do not display device identification information transmitted from the weighing device as the goods purchase information. That is, the display printing device 40 displays the good buttons based on the goods purchase information (device identification information and purchase weight) transmitted from the weighing device, but does not display some (device identification information) of the information transmitted from the weighing device (device identification information and purchase weight).

Moreover, on the good selection screen, an employee call button B9 to be operated when calling an employee is displayed. When the employee call button B9 is operated, the display printing device 40 transmits employee call information (the device identification information of the display printing device 40 and code information indicating an employee call) to the employee terminal.

When the good button B1 is operated (selected) on the good selection screen illustrated in FIG. 15A, the display printing device 40 displays a label issuance instruction screen such as that illustrated in FIG. 15B. Label information I1 related to the label to be printed and issued and a print button B8 are displayed on the label issuance instruction screen illustrated in FIG. 15B. Information similar to the information displayed on the good button operated on the good selection screen (good button B1) is displayed in the label information I1.

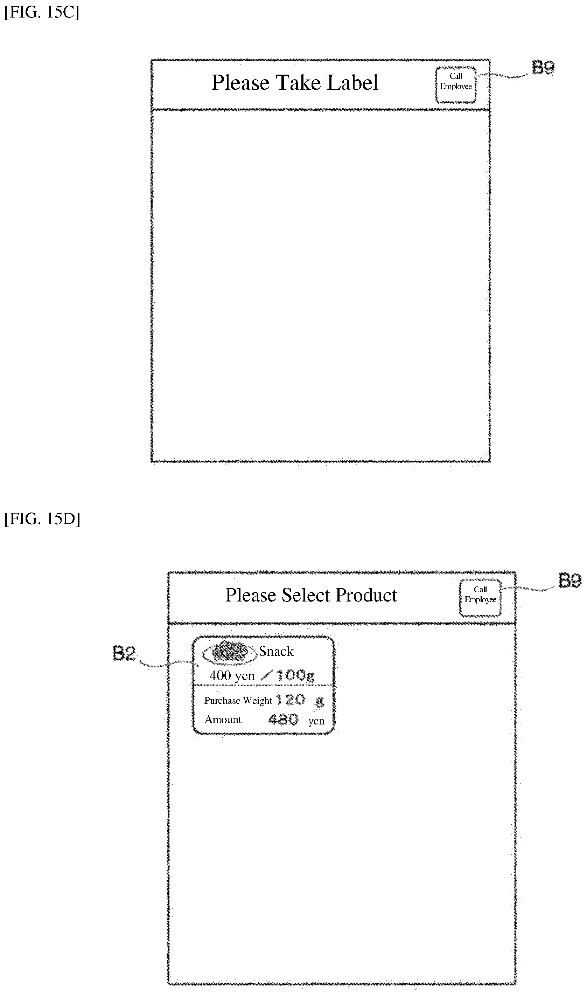

When the print button B8 is operated on the label issuance instruction screen illustrated in FIG. 15B, the display printing device 40 prints and issues the label of the snack A for the amount of the purchase weight (80g) and displays a label receipt waiting screen such as that illustrated in FIG. 15C.

The display printing device 40 displays a good selection screen such as that illustrated in FIG. 15D when the label is received from the situation illustrated in FIG. 15C. The good button B2 of the snack B before being selected (unselected) is displayed on the good selection screen illustrated in FIG. 15D.

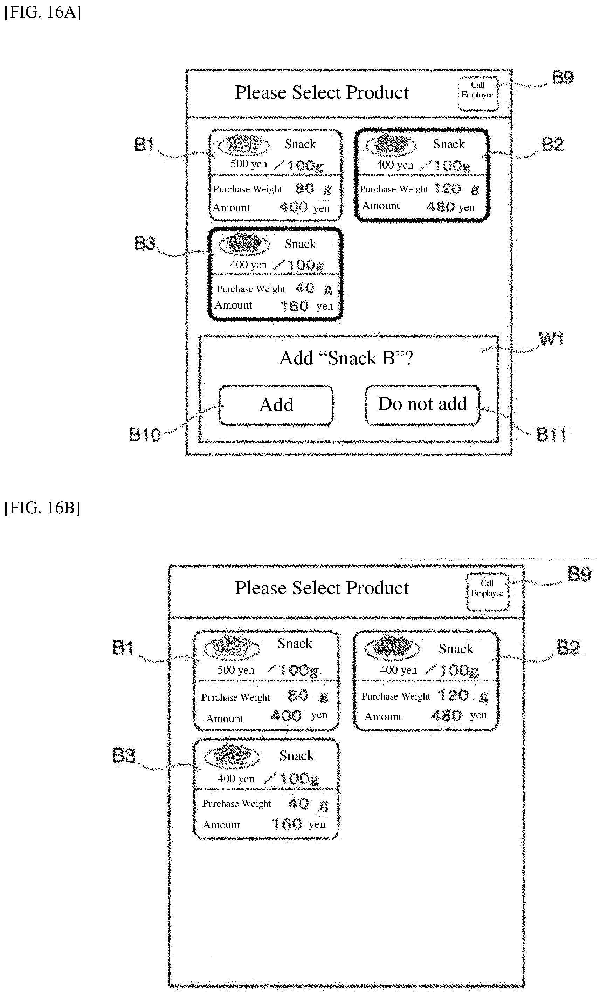

Next, the movement that occurs when good buttons of the same good are combined into one good button will be described. When receiving new device identification information and purchase weight (40 g) from the weighing device 10-2 while the good selection screen illustrated in FIG. 15A is displayed, the display printing device 40 displays, as illustrated in FIG. 16A, a good button B3 based on the newly received information from the weighing device 10-2 in addition to the good button B1 and the good button B2. On the good button B3, an image of the good, the good name "snack B", the unit price (400 yen/100 g), the purchase weight (40 g) and a price (160 yen) are displayed. Moreover, the display printing device 40 displays an adding necessity confirmation screen W1 for confirming whether or not to combine the good buttons (good button B2 and good button B3) for the same good (snack B) (confirming whether or not adding is necessary) on the front surface of the good selection screen, and displays the good buttons of the same good in an emphasized manner (emphasized by a thick frame in the example illustrated in the drawings).

The adding necessity confirmation screen W1 illustrated in FIG. 16A is a pop-up screen displayed on the front of the good selection screen. A message for confirming whether adding is necessary, an adding instruction button B10 for instructing that adding is to be performed, and a non-adding instruction button B 11 for instructing that adding is not to be performed are displayed on the adding necessity confirmation screen W1. The added information (purchase weight and purchase amount) may be displayed on the adding necessity confirmation screen W1 when an instruction is given to add (when the adding instruction button B10 is operated).

Furthermore, in the present example, the adding necessity confirmation screen W1 is displayed as a pop-up screen on the front of the good selection screen, but similar information may be displayed on the good selection screen. The same is true for the informing screens W2 to W4.

When the non-adding instruction button B11 is operated (selected) on the adding necessity confirmation screen W1 illustrated in FIG. 16A, the display printing device 40 erases the adding necessity confirmation screen W1 as illustrated in FIG. 16B and cancels the emphasized display on the good button B2 and the good button B3.

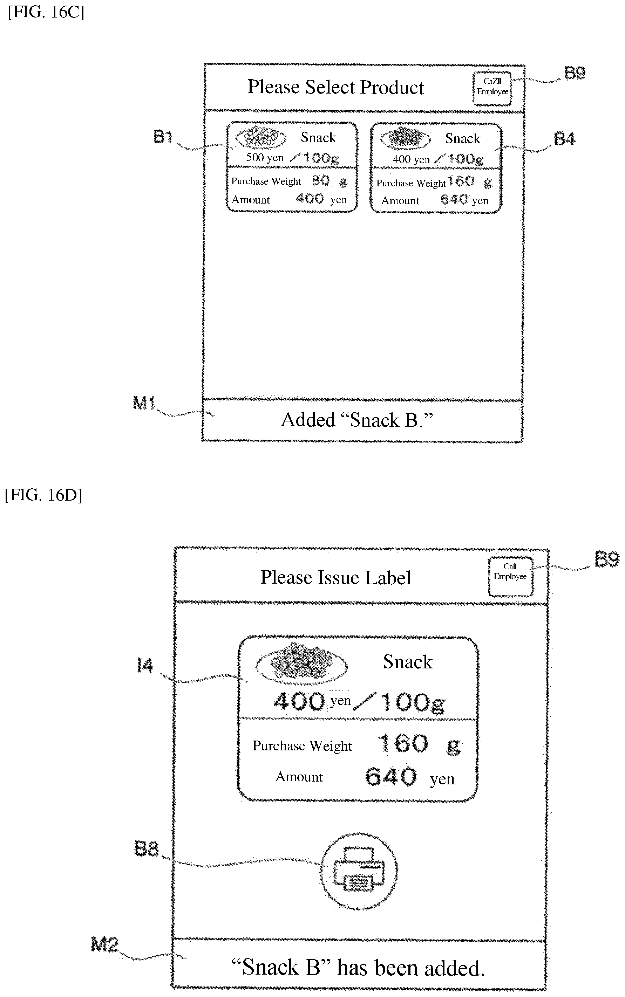

When the adding instruction button B10 is operated (selected) on the adding necessity confirmation screen W1 illustrated in FIG. 16A, the display printing device 40 erases the adding necessity confirmation screen W1 as illustrated in FIG. 16C, and displays a good button (added good button) B4 that adds the content of the good button B2 and the content of the good button B3 instead of the good button B2 and the good button B3. Moreover, the display printing device 40 displays a message M1 indicating that the "snacks B" are added as illustrated in FIG. 16C.

On the good button B4, the good name "snack B", the unit price (400 yen/100 g), the purchase weight (160 g) and a price (640 yen) are displayed. The purchase weight (160 g) of the good button B4 is a weight obtained by adding the purchase weight (120 g) of the good button B2 and the purchase weight (40 g) of the good button B3. The purchase amount (640 yen) of the good button B4 is a weight obtained by adding the purchase amount (480 yen) of the good button B2 and the purchase amount (160 yen) of the good button B3. That is, the display printing device 40 displays, on the added good button, the purchase weight obtained by adding the purchase weights of the respective good buttons before being added and the purchase amount obtained by adding the purchase amounts of the respective good buttons before being added Note that the display printing device 40 may display the added good button (added good button) and the non-added good buttons so as to be visually distinguished. For example, the display printing device 40 may display an indication of an added good button on the added good button, or display the added good button in a display state different from that of the non-added good buttons.

When the good button B4 is operated (selected) on the good selection screen illustrated in FIG. 16C, the display printing device 40 displays a label issuance instruction screen such as that illustrated in FIG. 16D. Label information I4 related to the label to be printed and issued and a print button B8 are displayed on the label issuance instruction screen illustrated in FIG. 16D. Information similar to the information displayed on the good button operated on the good selection screen (good button B4) is displayed in the label information I4. Moreover, the display printing device 40 displays a message M2 indicating that the "snacks B" are added as illustrated in FIG. 16D.

Note that in the above, an example was described of a transition (movement) to the good selection screen illustrated in FIG. 16C when the adding instruction button B 10 is operated in FIG. 16A, but it is also possible to transition to the label issuance instruction screen illustrated in FIG. 16D. That is, the display printing device 40 may temporarily display the added good button on the good selection screen after operating the adding instruction button B 10, or may display the label issuance instruction screen in the state where the added good button is selected without temporarily displaying the added good button on the good selection screen.

Furthermore, in the above, an example is described where the adding necessity confirmation screen W1 illustrated in FIG. 16A is displayed when new device identification information and purchase weight is received from the weighing device 10-2 while the good selection screen illustrated in FIG. 15A is displayed, but the good selection screen illustrated in FIG. 16C may also be displayed. That is, when receiving the device identification information and the purchase weight, when the good buttons of the good relating to the reception (good defined based on the device identification information) are displayed, the display printing device 40 may confirm to the customer whether to add the good buttons, and may display the added good button on the good selection screen without confirming.

Furthermore, the display printing device 40 may control the adding of the good buttons based on the passage of time. For example, the display printing device 40 may display the added good button without displaying the adding necessity confirmation screen W1 when the time from the first reception to the new reception is short (when there is a new reception before the first time has passed from the first reception) when a new device identification information and purchase weight are received from the weighing device 10-2 while the good button of the weighing device 10-2 is displayed after the device identification information and purchase weight are received from the weighing device 10-2, may display the adding necessity confirmation screen W1 when the time from the first reception to the new reception is moderate (when there is a new reception after the first time has passed from the first reception and before the second time that is longer than the first time has passed), or may display the good button separately without displaying the adding necessity confirmation screen W1 when the time from the first reception to the new reception is long (when there is a new reception after the second time has passed from the first reception). Note that the control for displaying the added good button without displaying the adding necessity confirmation screen W1 may be referred to as an automatic adding display control, the control for displaying the added necessity confirmation screen W1 may be referred to as an adding confirmation control, and the control for displaying the good buttons individually without displaying the adding necessity confirmation screen W1 may be referred to as an automatic individual display control.

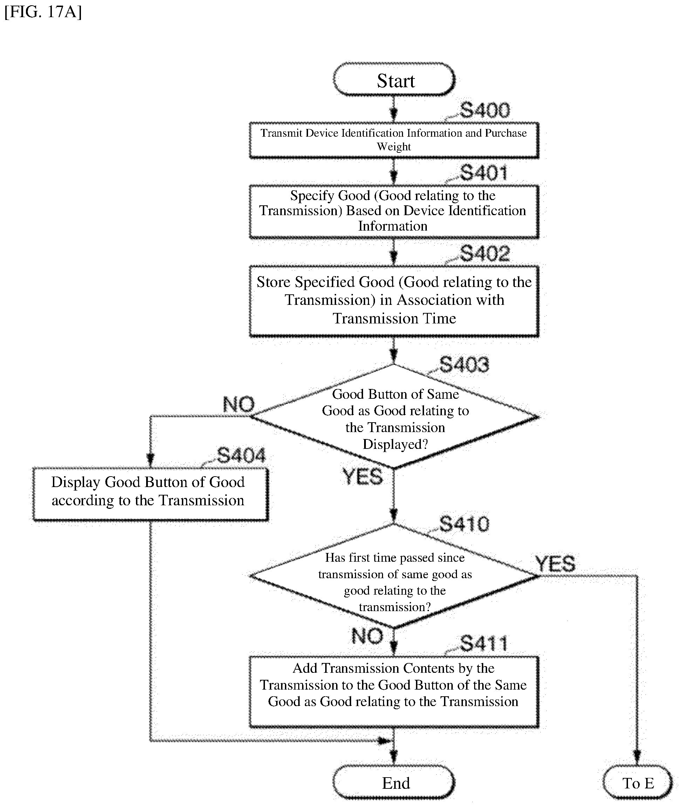

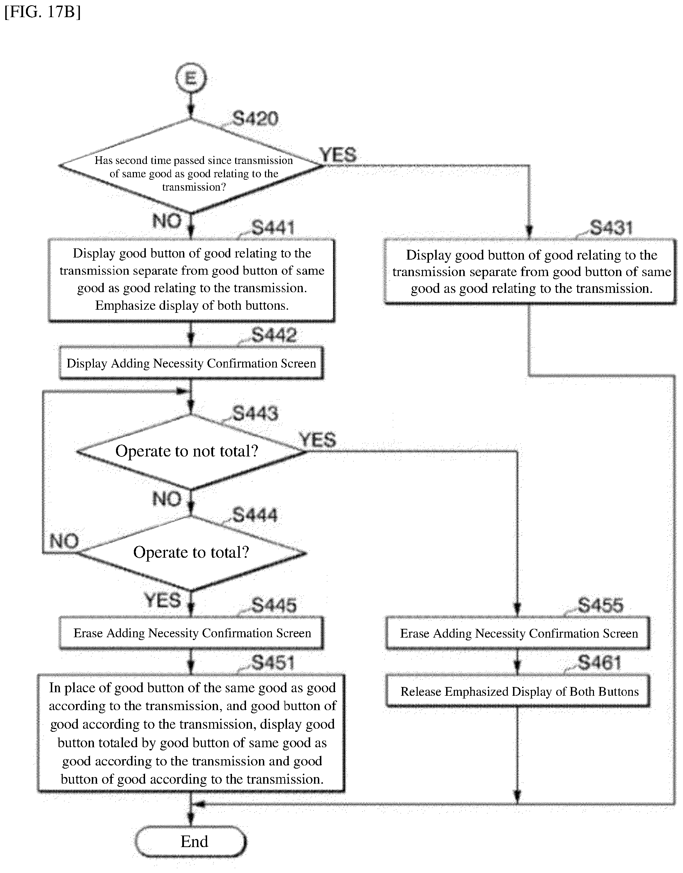

FIG. 17A and FIG. 17B are flowcharts illustrating an example of the operation of the display printing device 40. It is assumed that the first time is less than the second time.

### (Flowchart of FIG. 17A)

Step S400: The display printing device 40 receives the device identification information and the purchase weight from the weighing device. Next, the flow then proceeds to step S401.

Step S401: The display printing device 40 defines a good (good relating to the reception) based on the device identification information. Next, the flow then proceeds to step S402.

Step S402: The display printing device 40 stores the identified good (good relating to the reception) and the reception time in association with each other. Next, the flow then proceeds to step S403. Note that when the label is printed and issued for the good relating to the reception, the display printing device 40 erases the reception time corresponding to the good relating to the reception.

Step S403: The display printing device 40 determines whether the good button displayed is of the same good as the good relating to the reception. If such is displayed, the flow proceeds to step S410. When such is not displayed, the flow proceeds to step S404.

Step S404: The display printing device 40 displays the good button of the good relating to the reception. This flowchart then ends (returns to step S400 of FIG. 17A).

Step S410: The display printing device 40 determines whether a first time has passed from the reception of the same good as the good relating to the reception. When the first time has passed, the flow proceeds to step S420 in FIG. 17B. When the first time has not passed, the flow proceeds to step S421.

Step S411: The display printing device 40 adds the received content to the reception to the good button of the same good as the good relating to the reception. For example, when receiving new device identification information and purchase weight (40 g) from the weighing device 10-2 before a first time has passed since reception relating to the good button B2 while the good selection screen illustrated in FIG. 15A is displayed, the display printing device 40 displays, as illustrated in FIG. 16C, the good button B4 instead of the good button B2. That is, because there is a new reception before the first time has passed since the first reception, the display printing device 40 adds the current reception content to the good button being displayed by automatic adding display control. This flowchart then ends (returns to step S400 of FIG. 17A).

### (Flowchart of FIG. 17B)

Step S420: The display printing device 40 determines whether a second time has passed from the reception of the same good as the good relating to the reception. When the second time has passed, the flow proceeds to step S431. When the second time has not passed, the flow proceeds to step S441.

Step S431: The display printing device 40 displays the good button of the good relating to the reception separately from the good button of the same good as the good relating to the reception. For example, when receiving new device identification information and purchase weight (40 g) from the weighing device 10-2 after a second time has passed since reception relating to the good button B2 while the good selection screen illustrated in FIG. 15A is displayed, the display printing device 40 displays, as illustrated in FIG. 16B, the good button B4 in addition to the good button B2. That is, because there is a new reception after the second time has passed since the first reception, the display printing device 40 displays a good button according to the current reception content separately from the good button being displayed by automatic individual display control. This flowchart then ends (returns to step S400 of FIG. 17A).

Step S441: The display printing device 40 displays the good button of the good relating to the reception separately from the good button of the same good as the good relating to the reception. Moreover, the display printing device 40 displays both buttons with emphasis. Next, the flow then proceeds to step S442.

Step S442: The display printing device 40 displays an adding necessity confirmation screen W1. For example, when receiving new device identification information and purchase weight (40 g) from the weighing device 10-2 after the first time has passed from the reception relating to the good button B2 and before the second time has passed while the good selection screen illustrated in FIG. 15A is displayed, the display printing device 40 displays, as illustrated in FIG. 16A, the adding necessity confirmation screen W1. That is, because there is a new reception after the first time has passed and before the second time has passed since the first reception, the display printing device 40 displays the adding necessity confirmation screen W1 by adding confirmation control. Next, the flow then proceeds to step S443.

Step S443: The display printing device 40 determines whether there is an operation (operation of the non-adding instruction button B11) to not add on the adding necessity confirmation screen W1. When an operation has been performed to not add, the flow proceeds to step S455. When there has been no operation to not add, the flow proceeds to step S444.

Step S444: The display printing device 40 determines whether there is an operation (operation of the adding instruction button B10) to add on the adding necessity confirmation screen W1. When an operation has been performed to add, the flow proceeds to step S445. When there has been no operation to add, the flow returns to step S443.

Step S445: The display printing device 40 erases the adding necessity confirmation screen W1. Next, the flow then proceeds to step S451. Step S451: The display printing device 40 displays the good button in which the good button of the same good as the good relating to the reception and the good button of the good relating to the reception are added (the added good button) instead of the good button of the same good as the good relating to the reception and the good button of the good relating to the reception. This flowchart then ends (returns to step S400 of FIG. 17A).

Step S455: The display printing device 40 erases the adding necessity confirmation screen W 1. Next, the flow then proceeds to step S461.

Step S461: The display printing device 40 cancels the emphasized display of both buttons. This flowchart then ends (returns to step S400 of FIG. 17A).

That is, the display printing device 40, before the first time has passed (step S410 (NO)), adds the current reception content to the good button being displayed (step S411) without displaying the adding necessity confirmation screen W1 because it is highly likely that the good button belongs to the same customer; after the second time has passed (step S420 (NO)), displays the good button separately from the good button being displayed (step S431) because it is unlikely that the good button belongs to the same customer; and after the first time has passed but before the second time has passed (step S420 (YES)), displays the adding necessity confirmation screen W1 and, based on an instruction of the customer to add (step S444 (YES)), adds the good button (step S451).

Note that, when the second time period has passed, it was described that it is unlikely that the good button belongs to the same customer, however, it is also possible that a previous customer (a customer who should operate the item button being displayed) has left the display printing device 40. Therefore, the display printing device 40, when the second time has passed (step S420 (NO)), may display the good button separately from the good button being displayed (step S431), and may also transmit warning information (terminal identification information of the display printing device 40, and code information indicating that the item may have been left unprocessed) to the employee terminal.

FIG. 18 is an example of display on the display unit 45 of the display printing device 40. In the above, an example is described wherein, as adding confirmation control, the display printing device 40 displays the adding necessity confirmation screen W1 based on receiving information transmitted from the weighing device, but the display printing device 40 may also display the adding necessity confirmation screen W1 based on an operation performed by the customer. For example, when receiving new device identification information and purchase weight (40 g) from the weighing device 10-2 while the good selection screen illustrated in FIG. 15A is displayed, the display printing device 40 may display, as illustrated in FIG. 18, a good button B3 based on the newly received information from the weighing device 10-2 in addition to the good button B1 and the good button B2, and display an adding button B7. Then, when the adding button B7 is operated on the good selection screen illustrated in FIG. 18, the display printing device 40 may display the adding necessity confirmation screen W1 as illustrated in FIG. 16A.

Note that the display printing device 40 may display with emphasis the good buttons (item button B2, item button B3) to be added on the good selection screen as illustrated in FIG. 18. That is, when displaying the adding button B7, the display printing device 40 may display with emphasis good buttons to be added.

Moreover, when the adding button B7 is operated on the good selection screen illustrated in FIG. 18, the display printing device 40 may display the good button after addition (the good button B4) as illustrated in FIG. 16C without displaying the adding necessity confirmation screen W1.

A time limit may be provided for display of the adding button B7. For example, the display printing device 40, when it is determined that the first time has not passed since reception of the same good as the good relating to the reception (step S410 (NO) in FIG. 17A), may execute processing of step S411 without displaying the adding button B7; when it is determined that the first time has passed but the second time has not passed since reception of the same good as the good relating to the reception (step S420 (NO) in FIG. 17B), may display the adding button B7; and when it is determined that the second time has passed since reception of the same good as the good relating to the reception (step S420 (YES) in FIG. 17B), may execute processing of step S431 without displaying the adding button B7.

Note that the added good button may be separable. For example, when the added good button is displayed, the display printing device 40 may display a separation button (not illustrated). When the separation button is operated, the display printing device 40 erases the added good button and displays each of the item buttons before adding.

### (Operation of Weighing Device with Measured Weight as Purchase Weight)

The weighing device 30 of the third weighing unit 4C calculates the measured weight as the purchase weight of the goods. A transaction in the third weighing unit 4C begins when the goods release operation unit 303 of the goods supply device 300 is operated in a customer waiting state, causing goods to be released from the goods supply device 300 to the weighing device 30, and ends when the goods release operation unit 36 of the weighing device 30 is operated, causing all goods to be released from the weighing device 30 to the container 320.

When all the goods in the weighing device 30 have been released by operating the goods release operation unit 36, the weighing device 30 transmits goods purchase information to the display printing device 40. That is, when the goods release operation unit 36 is not operated (when no goods in the weighing device 30 have been released), or when the goods release operation unit 36 has been operated but some goods remain in the weighing device 30, the weighing device 30 does not transmit goods purchase information to the display printing device 40. Furthermore, when goods are released from the goods supply device 300 to the weighing device 30 in a state where some goods remain in the weighing device 30 after operating the goods release operation unit 36, calculation of the purchase weight becomes complicated, which may lead to misunderstandings with the customer and risk unnecessary trouble.

Therefore, the third weighing unit 4C monitors whether some or all of the goods are still stored in the weighing device 30 for a predetermined period of time. Furthermore, in the third weighing unit 4C, when goods are released from the goods supply device 300 to the weighing device 30 in a state where some goods remain in the weighing device 30 after operating the goods release operation unit 36, problems such as the above occur, so the operation of releasing goods from the goods supply device 300 to the weighing device 30 in a state where some goods remain in the weighing device 30 after operating the goods release operation unit 36 (that is, an operation of increasing the measured weight after the measured weight was decreased (decreased to any non-zero value)) is monitored as an abnormal operation (unauthorized operation).

FIG. 19A to FIG. 22 are descriptive diagrams for describing a transition and the like of a measured weight in the weighing device 30. In each FIG. 19A to FIG. 22, the horizontal axis represents the flow of time (time). In each of the drawings, the vertical axis represents weight (weight value). In each of the drawings, the solid line L4 illustrates the measured weight. Weights are appropriately illustrated using numbers above the solid line L4. Note that for convenience, the diagonal portions of the solid line L4 (portions where the value increases or decreases) are shown as straight lines. Furthermore, in the each of these drawings, a state (status) of the weighing device 30 displayed by the display 35e is also illustrated.

### (Measured Weight and the like at Each Time in FIG. 19A)

Times Tb0 to Tb1: Customer waiting state.

Times Tb1 to Tb2: The measured weight is increased due to the release of the good from the goods supply device 300 into the weighing device 30.

Times Tb2 to Tb3: After the goods are released from the goods supply device 300 into the weighing device 30; the measured weight is stable.

Times Tb3 to Tb4: The measured weight is decreased due to the release of the good from the weighing device 30 into the container 320.

Time Tb4 and following: Release of the good from the weighing device 30 into the container 320 is completed, and the measured weight is stable at zero.

### (Measured Weight and the like at Each Time in FIG. 19B)

Times Tc0 to Tc1: Customer waiting state.

Times Tc1 to Tc2: The measured weight is increased due to the release of the good from the goods supply device 300 into the weighing device 30.

Times Tc2 to Tc3: After the goods are released from the goods supply device 300 into the weighing device 30; the measured weight is stable.

Times Tc3 to Tc4: The measured weight is increased due to the release of the good from the goods supply device 300 into the weighing device 30.

Times Tc4 to Tc5: After the goods are released from the goods supply device 300 into the weighing device 30; the measured weight is stable.

Times Tc5 to Tc6: The measured weight is decreased due to the release of the good from the weighing device 30 into the container 320.

Time Tc6 and following: Release of the good from the weighing device 30 into the container 320 is completed, and the measured weight is stable at zero.

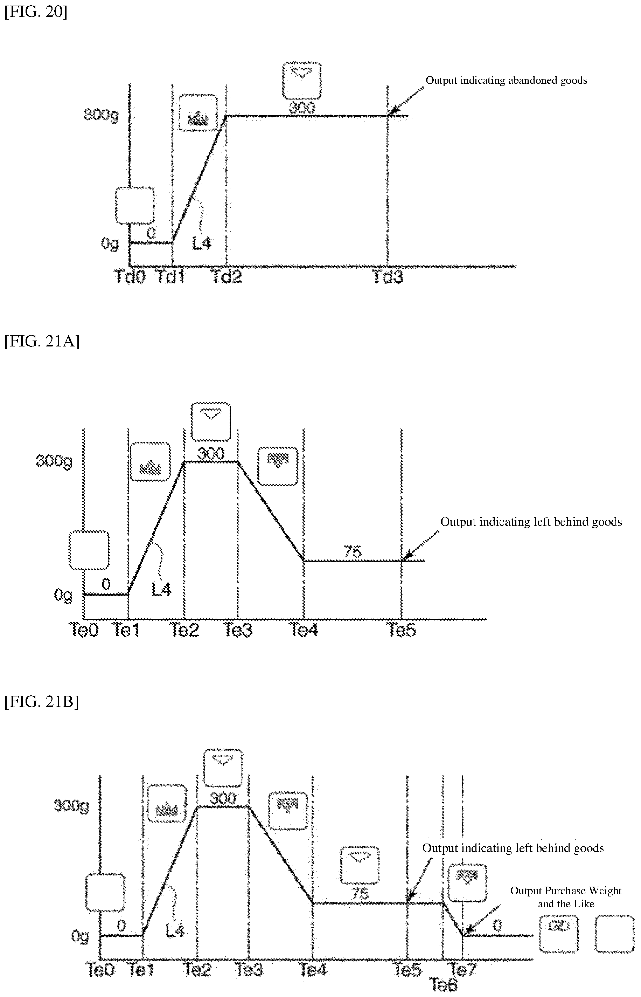

### (Measured Weight and the like at Each Time in FIG. 20)

Times Td0 to Td1: Customer waiting state.

Times Td1 to Td2: The measured weight is increased due to the release of the good from the goods supply device 300 into the weighing device 30.

Times Td2 to Td3: After the goods are released from the goods supply device 300 into the weighing device 30; the measured weight is stable.

Time Td3: Output indicating that a good has been abandoned. That is, since a predetermined time (time Td2 to Td3) has passed without goods being released from the weighing device 30 into the container 320, an output is generated indicating that a good (all weighed goods) has been abandoned in the weighing device 30.

### (Measured Weight and the like at Each Time in FIG. 21A)

Times Te0 to Te1: Customer waiting state.

Times Te1 to Te2: The measured weight is increased due to the release of the good from the goods supply device 300 into the weighing device 30.

Times Te2 to Te3: After the goods are released from the goods supply device 300 into the weighing device 30; the measured weight is stable.

Times Te3 to Te4: The measured weight is decreased due to the release of the good from the weighing device 30 into the container 320.

Times Te4 toTeS: After the goods are released from the weighing device 30 into the container 320; the measured weight is stable at a value other than zero.

Time Te5: Output indicating that a good is left behind. That is, since a predetermined time (time Te4 to Te5) has passed after goods are released from the weighing device 30 into the container 320, an output is generated indicating that a good (all weighed goods) is left behind in the weighing device 30.

### (Measured Weight and the like at Each Time in FIG. 21B)

Times Te0 to Te5: Similar to times Te0 to Te5 in FIG. 21A.

Times Te5 to Te6: When the good is left behind.

Times Te6 to Te7: The measured weight is decreased due to the release of the good from the weighing device 30 into the container 120.

Time Te7 and following: Release of the good from the weighing device 30 into the container 320 is completed, and the measured weight is stable at zero.

Note that abandoned goods in FIG. 21A means that all goods of the purchase weight amount remain in the weighing device 30. Left behind goods in FIG. 21B means some goods of the purchase weight amount remain in the weighing device 30. Both abandoned goods and left behind goods have in common that the goods are not completely released into the container 320.

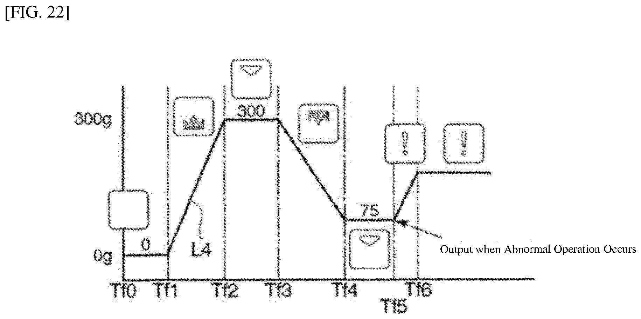

### (Measured Weight and the like at Each Time in FIG. 22)

Times Tf0 to Tf1: Customer waiting state.

Times Tf1 to Tf2: The measured weight is increased due to the release of the good from the goods supply device 300 into the weighing device 30.

Times Tf2 to Tf3: After the goods are released from the goods supply device 300 into the weighing device 30; the measured weight is stable.

Times Tf3 to Tf4: The measured weight is decreased due to the release of the good from the weighing device 30 into the container 320.

Times Tf4 toTf5: After the goods are released from the weighing device 30 into the container 320; the measured weight is stable at a value other than zero.

Times Tf5 to Tf6: The measured weight is increased due to the release of the good from the goods supply device 300 into the weighing device 30. At time Tf5, an output is generated indicating that an abnormal operation (unauthorized operation) has been performed. That is, since the good was supplied from the goods supply device 300 to the weighing device 30 in a state where the good was released from the weighing device 30 into the container 320 and some of the goods remain in the weighing device 30, an output is generated indicating that there was an abnormal operation. Furthermore, at times Tf5 to Tf6, a status indicating an abnormality (a mark such as illustrated in FIG. 14G) is displayed on the display 35e.

Time Tf6 and following: After the goods are released from the goods supply device 300 into the weighing device 30; the measured weight is stable. Even after time Tf6, the status indicating an abnormality is displayed on the display 35e.

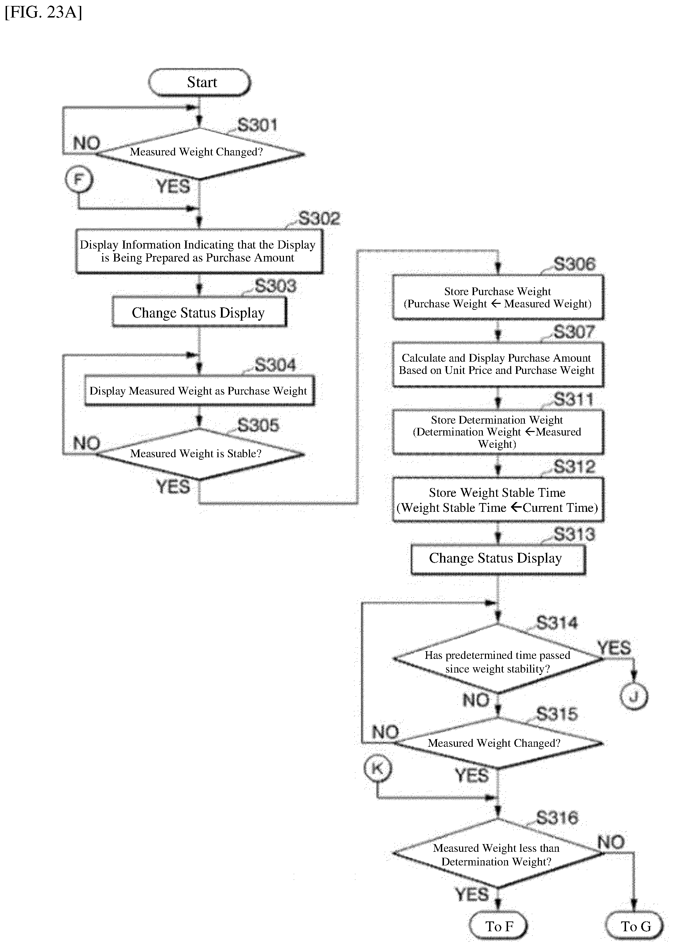

FIG. 23A to FIG. 23F are flowcharts illustrating an example of an operation of the weighing device 30. The weighing device 30 executes the processing of the flowchart in FIG. 23A while in the customer waiting state. Note that the weighing device 30 does not display anything as illustrated in FIG. 19 (times Tb0 to Tb 1) as a display of status (display of the display 35e) in the customer waiting state.

### (Flowchart of FIG. 23A)

Step S301: The weighing device 30 determines whether the measured weight has changed. That is, the weighing device 30 determines whether goods have been released from the goods supply device 300 into the weighing device 30. When the measured weight has changed, the flow then proceeds to step S302.

Step S302: The weighing device 30 displays information indicating that the display is being prepared as the purchase amount. Next, the flow then proceeds to step S303.

Step S303: The weighing device 30 changes the display of the status. Specifically, the weighing device 30 displays a mark such as that illustrated in FIG. 9A on the display 35e. Next, the flow then proceeds to step S304.

Step S304: The weighing device 30 displays the measured weight as the purchase weight. Next, the flow then proceeds to step S305.

Step S305: The weighing device 30 determines whether the measured weight is stable. When the measured weight is stable, the flow then proceeds to step S306. When the measured weight is not stable, the flow proceeds to step S304.

Step S306: The weighing device 30 stores the purchase weight. Specifically, the weighing device 30 stores the measured weight as the purchase weight. Next, the flow then proceeds to step S307.

Step S307: The weighing device 30 calculates the purchase amount based on the unit price and the purchase weight and displays on the display 35c. Next, the flow then proceeds to step S311.

Step S311: The weighing device 30 stores a determination weight. Specifically, the weighing device 30 stores the measured weight as the determination weight. Next, the flow then proceeds to step S312.

Step S312: The weighing device 30 stores a weight stable time. Specifically, the weighing device 30 stores the current time as the weight stable time. Next, the flow then proceeds to step S313.

Step S313: The weighing device 30 changes the display of the status. Specifically, the weighing device 30 displays a mark such as that illustrated in FIG. 9B on the display 35e. Next, the flow then proceeds to step S314.

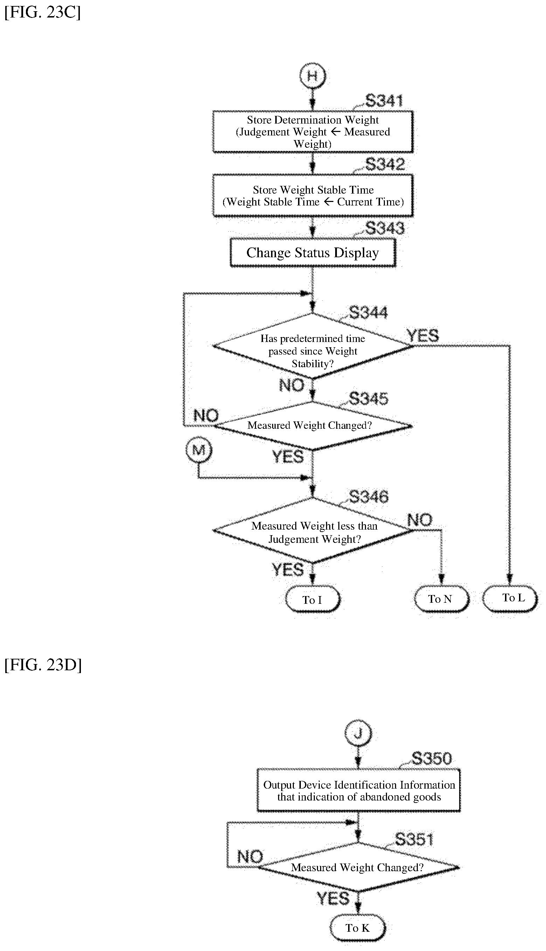

Step S314: The weighing device 30 determines whether a predetermined time has passed after the weight has stabilized. That is, the weighing device 30 compares the weight stable time stored in step S312 and the current time, and determines whether a predetermined time (for example, 30 seconds) has passed. When the predetermined time has passed, the flow proceeds to step S350 in FIG. 23D. When the predetermined time has not passed, the flow proceeds to step S315.

Step S315: The weighing device 30 determines whether the measured weight has changed. When the measured weight has changed, the flow then proceeds to step S316. When the measured weight has not changed, the flow proceeds to step S314.

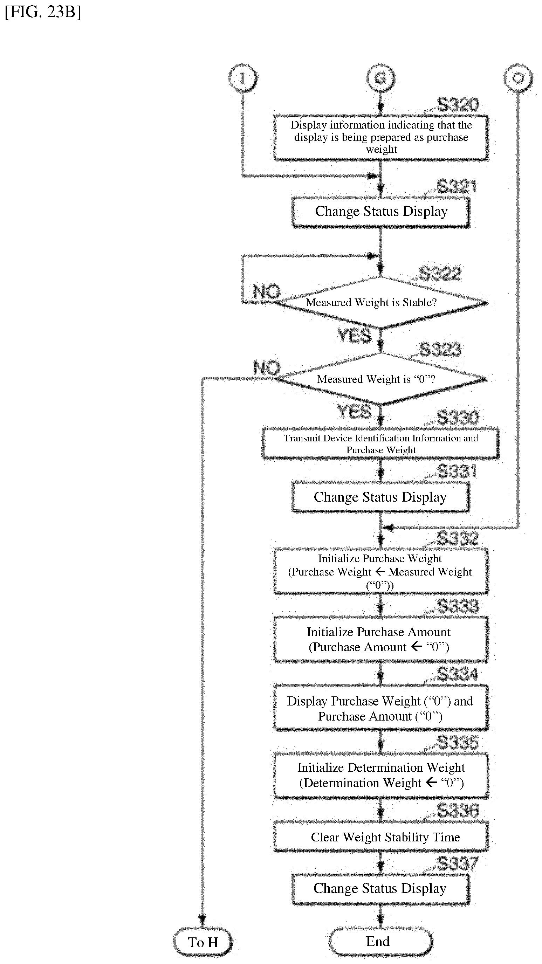

Step S316: The weighing device 30 determines whether the measured weight is larger than the determination weight. That is, the weighing device 30 determines whether the goods have been released from the goods supply device 300 into the weighing device 30, or whether the goods have been released from the weighing device 30 into the container 320. When the measured weight is larger than the determination weight, the flow proceeds to step S302. When the measured weight is not greater than the determination weight, the flow proceeds to step S320 in FIG. 23B. That is, when goods have been released from the goods supply device 300 into the weighing device 30, the flow returns to step S302. On the other hand, when goods have been released from the weighing device 30 into the container 320, the flow proceeds to step S320 in FIG. 23B.

### (Flowchart of FIG. 23B)

Step S320: The weighing device 30 displays information indicating that the display is being prepared as the purchase weight. Next, the flow then proceeds to step S321.

Step S321: The weighing device 30 changes the display of the status. Specifically, the weighing device 30 displays a mark such as that illustrated in FIG. 9C on the display 35e. Next, the flow then proceeds to step S322.

Step S322: The weighing device 30 determines whether the measured weight is stable. When the measured weight is stable, the flow then proceeds to step S323.

Step S323: The weighing device 30 determines whether the measured weight is zero. That is, the weighing device 30 determines whether all of the goods in the weighing device 30 have been released into the container 320. When the measured weight is zero (that is, when all the goods in the weighing device 30 are released into the container 320), the flow proceeds to step S330. When the measured weight is not zero (that is, some of the goods in the weighing device 30 remain in the weighing device 30 without being released into the container 320), the flow proceeds to step S341 in FIG. 23C.

Step S330: The weighing device 30 transmits goods purchase information (device identification information of the weighing device 30 and the purchase weight) to the display printing device 40. Next, the flow then proceeds to step S331.

Step S331: The weighing device 30 changes the display of the status. Specifically, the weighing device 13 displays, on the display 35e, a mark (check mark illustrated at time Tb4 in FIG. 19A) indicating that the goods purchase information has been transmitted to the display printing device 40. Next, the flow then proceeds to step S332.

Step S332: The weighing device 30 initializes the purchase weight. Next, the flow then proceeds to step S333.

Step S333: The weighing device 30 initializes the purchase amount. Next, the flow then proceeds to step S334.

Step S334: The weighing device 30 displays zero as the purchase weight on the display 35a and displays zero as the purchase amount on the display 35c. Next, the flow then proceeds to step S335.

Step S335: The weighing device 30 initializes the determination weight. Next, the flow then proceeds to step S336.

Step S336: The weighing device 30 clears the weight stable time. Next, the flow then proceeds to step S337.

Step S337: The weighing device 30 changes the display of the status. Specifically, the weighing device 30 updates to the mark in the customer waiting state as a display on the display 35e, that is, displays nothing as illustrated at times Tb0 to Tb1 in FIG. 19A. This flowchart then ends (returns to step S301 of FIG. 23A).

### (Flowchart of FIG. 23C)

Step S341: The weighing device 30 stores a determination weight. That is, the weighing device 30 stores the weight of some of the remaining goods. Next, the flow then proceeds to step S342.

Step S342: The weighing device 30 stores the weight stable time. Next, the flow then proceeds to step S343.

Step S343: The weighing device 30 changes the display of the status. Specifically, the weighing device 30 displays a mark such as that illustrated in FIG. 9B on the display 35e. Next, the flow then proceeds to step S344.

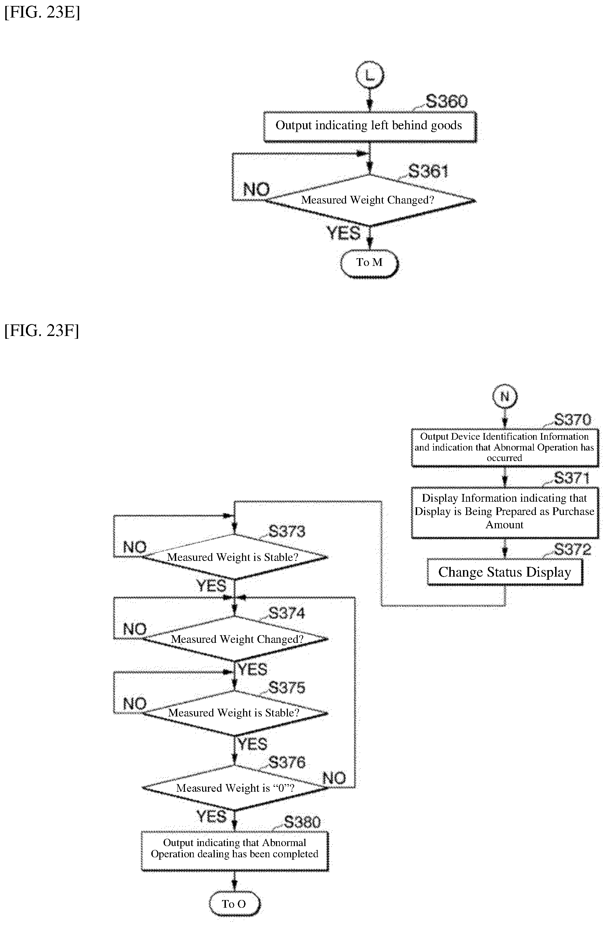

Step S344: The weighing device 30 determines whether a predetermined time has passed after the weight has stabilized. That is, the weighing device 30 compares the weight stable time stored in step S342 and the current time, and determines whether a predetermined time (for example, 15 seconds) has passed. When the predetermined time has passed, the flow proceeds to step S360 in FIG. 23E. When the predetermined time has not passed, the flow proceeds to step S345.

Step S345: The weighing device 30 determines whether the measured weight has changed. When the measured weight has changed, the flow then proceeds to step S346. When the measured weight has not changed, the flow proceeds to step S344.

Step S346: The weighing device 30 determines whether the measured weight is less than the determination weight. That is, the weighing device 30 determines whether the goods have been released from the weighing device 30 into the container 320, or whether the goods have been released from the goods supply device 300 into the weighing device 30. When the measured weight is less than the determination weight, the flow proceeds to step S321 in FIG. 23B. When the measured weight is not less than the determination weight, the flow proceeds to step S370 in FIG. 23F. That is, in a state where some goods remain in the weighing device 30, when the remaining goods are released into the container 320, the flow returns to step S321 in FIG. 23B. On the other hand, in a state where some goods remain in the weighing device 30, when goods are released from the goods supply device 300 into the weighing device 30, the flow proceeds to step S370 in FIG. 23F.

### (Flowchart of FIG. 23D)

Step S350: The weighing device 30 outputs that a good has been abandoned. For example, the weighing device 30 may transmit warning information (device identification information of the weighing device 30 and code information indicating that goods have been abandoned) to the employee terminal that goods have been abandoned. The weighing device 30 may transmit the warning information to the display printing device 40 instead of or in addition to the employee terminal. Next, the flow then proceeds to step S351.

Step S351: The weighing device 30 determines whether the measured weight has changed. When the measured weight has changed, the flow then proceeds to step S316 in FIG. 23A.

Note that in step S350, the weighing device 30 may output, from an audio output unit, a warning sound indicating that the good has been abandoned instead of or in addition to transmitting the warning information to the employee terminal or the display printing device 40. When the measured weight has changed (when the flow proceeds from step S351 to step S316), the weighing device 30 may stop outputting the warning sound.

### (Flowchart of FIG. 23E)

Step S360: The weighing device 30 outputs that a good has been left behind. For example, the weighing device 30 transmits warning information (device identification information of the weighing device 30 and code information indicating that a good has been left behind) to the display printing device 40 indicating a good has been left behind. Next, the flow then proceeds to step S361.

Step S361: The weighing device 30 determines whether the measured weight has changed. When the measured weight has changed, the flow then proceeds to step S346 in FIG. 23C.

Note that in step S360, the weighing device 30 may output, from an audio output unit, a warning sound indicating that the good has been left behind instead of or in addition to transmitting the warning information to the display printing device 40 or the employee terminal. When the measured weight has changed (when the flow proceeds from step S361 to step S346), the weighing device 30 may stop outputting the warning sound.

### (Flowchart of FIG. 23F)

Step S370: The weighing device 30 outputs that an abnormal operation has occurred. For example, the weighing device 30 transmits warning information (device identification information of the weighing device 30 and code information indicating that an abnormal operation has been performed) to the employee terminal that an abnormal operation has been performed. The weighing device 30 may transmit the warning information to the display printing device 40 instead of or in addition to the employee terminal. Next, the flow then proceeds to step S371.

Note that in step S370, the weighing device 30 may output, from an audio output unit, a warning sound indicating an abnormal operation instead of or in addition to transmitting the warning information to the employee terminal or the display printing device 40.

Step S371: The weighing device 30 displays information indicating that the display is being prepared as the purchase amount. Next, the flow then proceeds to step S372.

Step S372: The weighing device 30 changes the display of the status. Specifically, the weighing device 30 displays a mark such as that illustrated at times Tf5 to Tf6 in FIG. 21 (a mark such as that illustrated in FIG. 14G) on the display 35e. Next, the flow then proceeds to step S373.

Step S373: The weighing device 30 determines whether the measured weight is stable. That is, the weighing device 30 determines whether the measured weight is stable after an abnormal operation. When the measured weight is stable, the flow then proceeds to step S374.

Step S374: The weighing device 30 determines whether the measured weight has changed. That is, the weighing device 30 determines whether the measured weight has changed again after the measured weight has stabilized due to an abnormal operation. When the measured weight has changed, the flow then proceeds to step S375.

Step S375: The weighing device 30 determines whether the measured weight is stable. When the measured weight is stable, the flow then proceeds to step S376.

Step S376: The weighing device 30 determines whether the measured weight is zero. That is, the weighing device 30 determines whether all of the goods in the weighing device 30 have been released into the container 320. When the measured weight is zero, the flow then proceeds to step S380. When the measured weight is not zero, the flow then proceeds to step S374.

Note that in a situation of determining whether the measured weight has changed in step S374, like in a situation of determining whether the measured weight has changed in another situation during a transaction (for example, step S315 in FIG. 23A, step S345 in FIG. 23C, step S351 in FIG. 23D, or step S361 in FIG. 23E), a decrease in measured weight (release of goods from the weighing device 30 into the container 320) may be determined as a change in measured weight and an increase in measured weight (release of goods from the goods supply device 300 into the weighing device 30) may be determined as a change in measured weight. When the employee who has confirmed the warning information transmitted in step S370 releases the goods from the weighing device 30 (for example, releases the goods into a container prepared by the employee), or when the customer releases the goods from the weighing device 30 into the container 320 before release by the employee, the weighing device 30 determines the decrease in the measured weight as a change in the measured weight. On the other hand, when the customer releases goods from the goods supply device 300 into the weighing device 30 before release by the employee, the weighing device 30 determines the increase in the measured weight as a change in the measured weight. Note that a situation in which the measured weight increases from step S374 is a situation in which an abnormal operation has been performed again, but since this has already been processed as an abnormal operation (processing of step S370 and step S372, and the like), processing is the same whether the measured weight is increased or decreased from step S374.

Step S380: The weighing device 30 outputs that a countermeasure against an abnormal operation has completed. For example, the weighing device 30 transmits completion information (device identification information of the weighing device 30 and code information indicating that processing for the abnormal operation has been completed) to the employee terminal indicating that processing for the abnormal operation has been completed. The weighing device 30 may transmit the completion information to the display printing device 40 instead of or in addition to the employee terminal. Furthermore, when the weighing device 30 is outputting a warning sound in step S370, outputting of the warning sound stops. Next, the flow then proceeds to step S332 in FIG. 23B.

For example, at times Tb1 to Tb2 in FIG. 19A, times Tc1 to Tc2 or times Tc3 to Tc4 in FIG. 19B, times Td1 to Td2 in FIG. 20, times Te1 to Te2 in FIG. 21A (FIG. 21B), and times Tf1 to Tf2 in FIG. 22, the weighing device 30 repeatedly executes step S305 (NO) in FIG. 23A. The display unit 35 in FIG. 9A is an example of display when step S305 (NO) in FIG. 23A is repeatedly executed.

At times Tb2 to Tb3 in FIG. 19A, times Tc2 to Tc3 or times Tc4 to Tc5 in FIG. 19B, times Td2 to Td3 in FIG. 20, times Te2 to Te3 in FIG. 21A (FIG. 21B), and times Tf2 to Tf3 in FIG. 22, the weighing device 30 repeatedly executes step S315 (NO) in FIG. 23A. The display unit 35 in FIG. 9B is an example of display when step S315 (NO) in FIG. 23A is repeatedly executed.

At times Tb3 to Tb4 in FIG. 19A, times Tc5 to Tc6 in FIG. 19B, times Te3 to Te4 in FIG. 21A (FIG. 21B), and times Tf3 to Tf4 in FIG. 22, the weighing device 30 repeatedly executes step S322 (NO) in FIG. 23B. The display unit 35 in FIG. 9C is an example of display when step S322 (NO) in FIG. 23B is repeatedly executed.

Note that the weighing device 30 may, for example, transmit to the display printing device 40 unit price acquisition request information (for example, device identification information of the weighing device 30 and code information indicating a request for transmission of the unit price to itself) that requests the unit price of the goods (the goods housed in the goods supply devices 300 forming a set) when powering on, and store the unit price acquired from the display printing device 40.

Furthermore, the weighing device 30 changes the display of status to a mark such as that illustrated in FIG. 14G (step S372) when the measured weight decreases to a value that does not reach zero after increasing and stabilizing, then increases from the decreased value (value other than zero) (see FIG. 22), but may also change the display of status to a mark such as that illustrated in FIG. 14G when a predetermined time has passed while the measured weight is still stable after having increased (see FIG. 20) or when a predetermined time has passed while the measured weight is still at a decreased value after having decreased to a value that does not reach zero after increasing and stabilizing (see FIG. 21A and FIG. 21B).

Furthermore, the weighing device 30 transmits to the employee terminal warning information indicating that an abnormal operation has been performed (step S370) and changes the display of status to a mark such as that illustrated in FIG. 14G (step S372) when the measured weight is increased after having decreased, but the weighing device 30 may also transmit to the employee terminal warning information and change the display of status to a similar mark when an amount of goods overflowing from the guide body 38 (receiving side opening 38A) is released from the goods supply device 300. The warning information transmitted when the measured weight is increased after having decreased, and the warning information transmitted when an amount of goods overflowing from the guide body 38 is released from the goods supply device 300 may be made distinguishable on the receiving side (display printing device 40). For example, the weighing device 30, in the former case, may transmit warning information including code information indicating that an abnormal operation has been performed to increase the measured weight after the measured weight was decreased, and in the latter case, may transmit warning information including code information indicating that an abnormal operation has been performed to overflow the goods from the guide body 38. Note that the weighing device 30 may determine that the amount of goods overflowing from the guide body 38 has been released from the goods supply device 300 when the measured weight reaches a limit weight (maximum weight at which the goods do not overflow). The weighing device 30 may request the limit weight of the goods from the display printing device 40, similarly to the unit price of the goods, and store the limit weight obtained from the display printing device 40.

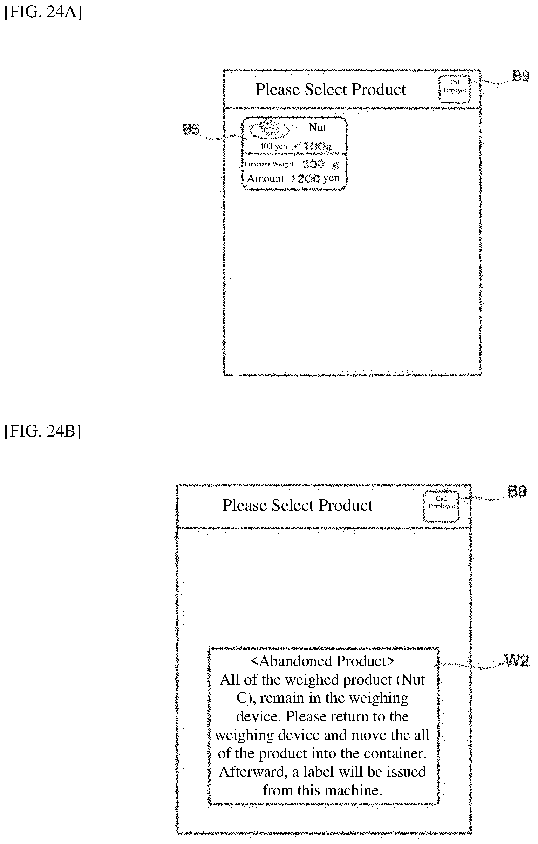

FIG. 24A to FIG. 24D are examples of display on the display unit 45 of the display printing device 40. In the description of FIGS. 24A to 24D, the weight of the nut C (unit price is 400 yen/100 g) is measured by the weighing device 30-1.

When the weighing device 30-1 transmits goods purchase information (device identification information of the weighing device 30-1 and purchase weight "300 g") to the display printing device 40 in step S330 of FIG. 23B, the display printing device 40 displays a good selection screen such as that illustrated in FIG. 24A. The good button B5 of the nut C is displayed on the good selection screen illustrated in FIG. 24A.

When the weighing device 30-1, in step S350 of FIG. 23D, transmits to the display printing device 40 warning information (device identification information of the weighing device 30-1 and code information indicating that goods have been abandoned) indicating that goods have been abandoned, the display printing device 40 displays the informing screen W2 for informing of the abandoned goods on the front surface of the good selection screen, as illustrated in FIG. 24B. The informing screen W2 informs that all of the goods remain on the weighing device, that the customer should return to the weighing device to transfer the remaining goods to a container, and that a label will be issued after transfer to the container.

Note that the display printing device 40 may display the device identification information of the target weighing device, the weight of the goods remaining in the weighing device, and the amount of money corresponding to the weight on the informing screen W2. For example, the weighing device 30, in step S350, in addition to the device identification information of the weighing device 30 and code information indicating that goods have been abandoned, may transmit to the display printing device 40 warning information including the measured weight (measured weight determined to be stable in step S305), and the purchase amount (purchase amount calculated based on the unit price and the measured weight determined to be stable in step S305. That is, the purchase amount calculated in step S307), and the display printing device 40, in the informing screen W2, may display the device identification information included in the warning information as the device identification information of the target weighing device, display the measured weight included in the warning information as the weight of the goods remaining in the weighing device, and display the purchase amount included in the warning information as the amount of money corresponding to the weight.

When the weighing device 30-1 thereafter transmits goods purchase information (device identification information of the weighing device 30-1 and purchase weight "300 g") to the display printing device 40 in step S330 of FIG. 23B, the display printing device 40 erases the informing screen W2 and displays a good selection screen such as that illustrated in FIG. 24A.

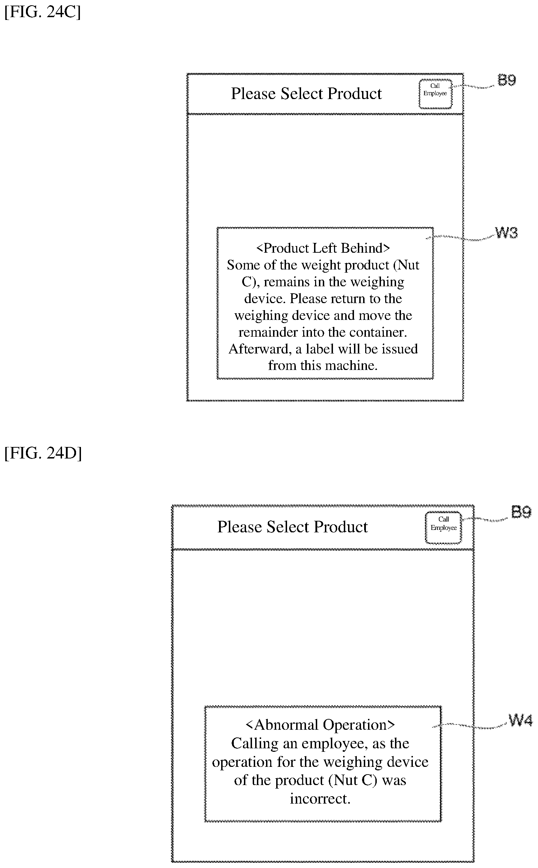

When the weighing device 30-1, in step S360 of FIG. 23E, transmits to the display printing device 40 warning information (device identification information of the weighing device 30-1 and code information indicating that goods have been left behind) indicating that goods have been left behind, the display printing device 40 displays the informing screen W3 for informing of the left behind goods on the front surface of the good selection screen, as illustrated in FIG. 24C. The informing screen W3 informs that some of the goods remain on the weighing device, that the customer should return to the weighing device to transfer the remaining goods to a container, and that a label will be issued after transfer to the container.

Note that the display printing device 40 may display the device identification information of the target weighing device, the weight of the goods remaining in the weighing device, and the amount of money corresponding to the weight on the informing screen W3. For example, the weighing device 30, in step S360, in addition to the device identification information of the weighing device 30 and code information indicating that goods have been left behind, may transmit to the display printing device 40 warning information including the measured weight (measured weight determined to be stable in step S322), and the purchase amount (purchase amount calculated based on the unit price and the measured weight determined to be stable in step S322), and the display printing device 40, in the informing screen W3, may display the device identification information included in the warning information as the device identification information of the target weighing device, display the measured weight included in the warning information as the weight of the goods remaining in the weighing device, and display the purchase amount included in the warning information as the amount of money corresponding to the weight.

When the weighing device 30-1 thereafter transmits goods purchase information (device identification information of the weighing device 30-1 and purchase weight "300 g") to the display printing device 40 in step S330 of FIG. 23B, the display printing device 40 erases the informing screen W3 and displays a good selection screen such as that illustrated in FIG. 24A.

When the weighing device 30-1, in step S370 of FIG. 23F, transmits to the display printing device 40 warning information (device identification information of the weighing device 30 and code information indicating that an abnormal operation has be performed) indicating that an abnormal operation has been performed, the display printing device 40 displays the informing screen W4 for informing of the abnormal operation on the front surface of the good selection screen, as illustrated in FIG. 24D. The informing screen W4 notifies the user that an operation of the weighing device for goods was not correct, and that an employee is being called.

Note that the display printing device 40 may display the device identification information of the target weighing device on the informing screen W4.

Above, according to the sales processing system 1 according to the embodiment, various situations that are assumed in measurement sales can be suitably dealt with.

In the first weighing unit 4A (and likewise, the second weighing unit 4B), when a good is returned to the weighing device 10 (and likewise, the weighing device 20) in the customer waiting state (when the measured weight exceeds the reference weight), an abnormal state is determined, and the goods purchase information is not transmitted to the display printing device 40. That is, the weighing device 10 (and likewise, the weighing device 20) executes the processing of step S26 when the measured weight is less than the reference weight (step S3 (YES)), and does not execute the processing of step S26 when the measured weight is not less than the reference weight (step S3 (NO)).

Furthermore, in the first weighing unit 4A (and likewise, the second weighing unit 4B) the abnormal state is immediately resolved by an operation of an employee (purchase weight reset operation). For example, the processes of step S63 (YES) in FIG. 13C and on (particularly the processes of steps S88 to S90) is applied. As described above, when an abnormal state of the weighing device 10 (and likewise, the weighing device 20) is reached, operation by the employee (purchase weight reset operation) is prompted, so warning information indicating that an abnormal state has been reached may be transmitted to the employee terminal.

In the display printing device 40, because a situation may arise in which a plurality of good buttons for one good are displayed and a label issuing operation of the good must be performed a plurality of times, the good buttons of the same good are gathered into one good button as appropriate (executing processing according to the passage of time) to simplify operation.

The third weighing unit 4C appropriately handles each situation when an abnormal operation (operation for releasing the goods from goods supply device 300 into the weighing device 30 in a state where some goods remain without releasing all the goods in the weighing device 30) has been performed, or when a state is reached where goods remain in the measurement device 30 for a predetermined time (all goods abandoned or some goods left behind). For example, the weighing device 30 informs the employee when there an abnormal operation has been performed, and causes the employee to resolve the abnormal state. That is, when it is determined that an abnormal operation has been performed (step S346 (NO) in FIG. 23C), the weighing device 30 executes post-processing for transitioning to the customer waiting state (step S380 in FIG. 23F and steps S332 to S337 in FIG. 23B) when an output is generated indicating that an abnormal operation has been performed (step S370 in FIG. 23F) and the employee releases all goods in the weighing device 30 (step S376 (YES) in FIG. 23F). Furthermore, the weighing device 30 is configured not to transmit the goods purchase information to the display printing device 40 when an abnormal operation has been performed. That is, the weighing device 30 is configured not to execute the processing of step S330 in FIG. 23B when it is determined that an abnormal operation has been performed (step S346 (NO) in FIG. 23C).

The embodiments above were described, but the above embodiments are examples, and the specific configurations are not limited to the above embodiments, and designs and the like within a scope that does not depart from the spirit of the invention are also included. For example, the following (1) to (20) may be adopted. In addition, the following (1) to (20) may be combined as appropriate.
(1) In the above embodiments, the weighing devices (weighing device 10, weighing device 20, and weighing device 30) are described as transmitting device identification information and purchase weight as goods purchase information to the display printing device 40. However, the weighing devices may transmit goods identification information that identifies the goods to the display printing device 40 instead of or in addition to the device identification information.
(2) This is also related to (1) above, but the display printing device 40 may store goods identification information, goods (names of goods), unit prices, and images in association with the device identification information. The weighing devices (weighing device 10, weighing device 20, and weighing device 30) may acquire and store the goods identification information, similar to the unit price, from the display printing device 40.
(3) In the above embodiments, the weighing devices (weighing device 10, weighing device 20, and weighing device 30) are described as transmitting device identification information and purchase weight as goods purchase information to the display printing device 40. However, instead of or in addition to the purchase weight, the weighing devices may transmit a purchase amount to the display printing device 40, may transmit a unit price to the display printing device 40, and may transmit a purchase amount and a unit price to the display printing device 40.
(4) In the above embodiments, an example has been described where the weighing device 10 displays the purchase weight as a positive value on the display 15a when the measured weight decreases (when the measured weight does not exceed the reference weight) (see, for example, the display 15a in FIG. 14B), and displays the purchase weight as a negative value on the display 15a when the measured weight increases (when the measured weight exceeds the reference weight) (see, for example, the display 15a in FIG. 14G). However, display on the display 15a when the measured weight increases is not limited to this. For example, the weighing device 10 may display information other than the purchase weight (for example, "ERROR") on the display 15a when the measured weight increases. When the measured weight increases, the weighing device 10 may display information indicating that the display is being prepared. The weighing device 10 may hide the display of the display 15a when the measured weight increases. The same is also true for the weighing device 20. That is, when the measured weight increases, the weighing device 20 may display information other than the purchase weight (for example, "ERROR") on the display device 25a, may display information indicating that the display is being prepared, or may hide the display of the display 25a.

The weighing device 10 (weighing device 20) may change the display on the display 15a (display 25a) to a display that means zero (for example, "0") when a state in which the measured weight has increased continues for a predetermined time. That is, the weighing device 10 (weighing device 20) may make the above change based on the operation of a purchase weight reset, or may make the above change based on the passage of time instead of or in addition to the operation of a purchase weight reset. Furthermore, the weighing device 10 (weighing device 20) may output a request to acquire the unit price (unit price acquisition request information) when the above change is made (may be before or after the change).

(5) In the above embodiments, an example has been described where the weighing device 10 displays the purchase amount as a positive value on the display 15c when the measured weight decreases (when the measured weight does not exceed the reference weight) (see, for example, the display 15c in FIG. 14B), and displays the purchase amount as a negative value on the display 15c when the measured weight increases (when the measured weight exceeds the reference weight) (see, for example, the display 15c in FIG. 14G). However, display on the display 15c when the measured weight increases is not limited to this. For example, the weighing device 10 may display information other than the purchase weight (for example, "ERROR") on the display 15c when the measured weight increases. When the measured weight increases, the weighing device 10 may display information indicating that the display is being prepared. The weighing device 10 may hide the display of the display 15c when the measured weight increases. The same is also true for the weighing device 20. That is, when the measured weight increases, the weighing device 20 may display information other than the purchase amount (for example, "ERROR") on the display device 25c, may display information indicating that the display is being prepared, or may hide the display of the display 25c.

The weighing device 10 (weighing device 20) may change the display on the display 15c (display 25c) to a display that means zero (for example, "0") when a state in which the measured weight has increased continues for a predetermined time. That is, the weighing device 10 (weighing device 20) may make the above change based on the operation of a purchase weight reset, or may make the above change based on the passage of time instead of or in addition to the operation of a purchase weight reset. Furthermore, the weighing device 10 (weighing device 20) may output a request to acquire the unit price (unit price acquisition request information) when the above change is made (may be before or after the change).

(6) While related to (4) and (5) above, when the guide body 38 or the like is removed from the main body 30A, the weighing device 30 may display information other than the weight (for example, "ERROR") as the display device 35a, may display information indicating that the display is being prepared, or may hide the display of the display 35a. Furthermore, when the guide body 38 or the like is removed from the main body 30A, the weighing device 30 may display information other than the amount of money (for example, "ERROR") as the display of the display device 35c, may display information indicating that the display is being prepared, or may hide the display of the display 35c. Note that, because the measured weight of the weighing device 30 is zero when no good is housed in the guide body 38, when the guide body 38 or the like is removed from the main body 30A, the measured weight becomes a negative value.

(7) In the above embodiments, an example was described where the weighing device 10 does not perform processing by an abnormal operation even when goods are taken from the goods supply device 100 then all or some of the taken goods are returned to the goods supply device 100, but processing may be performed by an abnormal operation. For example, the weighing device 10 may store the same weight as the determination weight stored by the weighing device 30, and determine whether goods are taken from the goods supply device 100 then all or some of the taken goods are returned to the goods supply device 100. Depending on characteristics of the goods, returning the taken goods may be prohibited. The same is also true for the weighing device 20.

(8) In the above embodiments, an example was described where the weighing device 30 stores the current time after measured weight stabilization as the weight stable time, but the weighing device 30 may store the current time at the start of measured weight change as a weight change time instead of storing the current time after measured weight stabilization as the weight stable time. That is, the weighing device 30 may determine abandoned goods based on the time passed since the time (weight change time) when the goods release operation unit 303 was operated and the measured weight changed, instead of the time (weight stable time) when the goods release operation unit 303 of the goods supply device 300 was operated and the measured weight changed (increased). Furthermore, the weighing device 30 may determine left behind goods based on the time passed since the time (weight change time) when the goods release operation unit 36 was operated and the measured weight changed, instead of the time (weight stable time) when the goods release operation unit 36 of the weighing device 30 was operated and the measured weight changed (decreased).

(9) In the above embodiments, an example is described where the display printing device 40 compares the time passed since the reception time of the information relating to the good button being displayed and two reference times (first time and second time) to control adding of a good button, but the display printing device 40 may control adding of the good button by comparing the time passed and one reference time or three or more reference times. For example, the display printing device 40 may display the added good button before one reference time passes, and display a separate good button after the reference time has passed (in the present example, the adding necessity confirmation screen W1 is not displayed either before or after the reference time has passed).

(10) In the above embodiments, an example is described where the display printing device 40 compares the time passed since the reception time of the information relating to the good button being displayed and two reference times (first time and second time) to control adding of a good button, but the display printing device 40 may control adding of the good button by comparing a time passed since the display start time of the good button being displayed and one or more reference times.

(11) In the above embodiments, the display printing device 40 is described as printing and issuing a label, but, relating to the following (17) as well, information similar to information (product name, purchase weight, purchase amount, and the like) to be printed on the label may be output to an electronic medium (IC card or the like) or an electronic device (smart phone, wearable terminal, or the like).

(12) The display printing device 40 may be provided with a settlement function (credit settlement or the like). After settlement, a receipt including information similar to information to be printed on the label may be printed and issued. Furthermore, the receipt may be an electronic receipt. That is, the display printing device 40 may output information similar to information to be printed on the label as a part of information of the electronic receipt.

(13) In the above embodiments, an example is described where the sales processing system 1 is provided with a display printing device 40 having a display function (display unit 45) that displays a good button and a printing function (printing unit 48) that prints and issues a label, but the sales processing system 1 may be provided with a display device having a display function but not having a printing function instead of or in addition to the display printing device 40 (referred to as a display device 80. for example, a display apparatus, a personal computer, or a tablet terminal). The display device 80 controls the adding of a good button similarly to the display printing device 40. The display device 80 transmits information to another device (printer or the like), and the other device prints and issues the label based on the information received from the display device 80.

(14) In the above embodiments, it was described that the weighing device 10 executes processing at the time of an abnormality (processing of step S44 and on) when it is determined that a change in measured weight from the customer waiting state is a change exceeding the reference weight, that is, when it is determined that the measured weight has increased from the customer waiting state (step S3 (NO) in FIG. 13A). However, with the first weighing unit 4A, a customer may use a scoop to stir or dig up the goods when transferring the goods from the goods supply device 100 to the container 120. In such a case, the weight, vibration, pressure, etc. of the scoop may cause the measured weight to increase from the customer waiting state. That is, in addition to a situation where the measured weight increases from the customer waiting state due to returning the goods to the goods supply device 100, even in a situation where the measured weight increases due to handling of a scoop or the like, the weighing device 10 determines that the measured weight exceeds the reference weight and executes processing at the time of an abnormality. In regards to this, the weighing device 10 may operate as in (a) or (b) below.
(a) In the flowchart illustrated in FIG. 13A, the weighing device 10 compares the measured weight and the reference weight before determining whether the measured weight is stable, but the weighing device 10 may compare the measured weight and the reference weight after determining that the measured weight is stable. For example, the weighing device 10 may compare the measured weight (stable measured weight) and the reference weight immediately after determining that the measured weight is stable, or may compare the measured weight (stable measured weight) and the reference weight after a predetermined time (for example, 3 seconds) has passed after determining that the measured weight is stable.
(b) In the flowchart illustrated in FIG. 13A, the weighing device 10 executes processing at the time of an abnormality when the measured weight at a certain timing exceeds the reference weight, but may execute a processing at the time of an abnormality when the measured weight exceeds the reference weight over a predetermined time (for example, 3 seconds). For example, the weighing device 10 may execute processing at the time of an abnormality when a state in which the measured weight (measured weight before stabilization, measured weight after stabilization) exceeds the reference weight has continued for a predetermined time after determining that the measured weight has changed (when the measured weight exceeds the reference weight for a predetermined time) or may execute processing at the time of an abnormality when a state in which the measured weight (measured weight after stabilization) exceeds the reference weight has continued for a predetermined time after determining that the measured weight has stabilized (when the measured weight exceeds the reference weight for a predetermined time).

Note that in the case of (a) and (b) above, before the predetermined time has passed, it is not yet certain whether to execute the normal processing or the processing at the time of abnormality. Therefore, while it is natural, the weighing device 10 does not transmit the goods purchase information (step S26 in FIG. 13B) or update the reference weight (step S28 in FIG. 13B, step S88 in FIG. 13C) before the predetermined time has passed. For example, the weighing device 10 may ignore a confirmation operation or a purchase weight reset operation before the predetermined time has passed. This makes it possible to prevent inaccurate purchase weights from being transmitted or inaccurate reference weights from being updated due to a temporary increase in measured weight that may occur when, for example, digging up a good using a scoop.

In the above, the first weighing unit 4A is described, but the second weighing unit 4B is the same. In the case of the second weighing unit 4B, it is difficult for the customer to touch the good (liquid) in the goods supply device 200, but when the good in the goods supply device 200 is touched, a situation may arise where the measured weight from the weighing device 20 increases and exceeds the reference weight.

(15) In the above embodiments, an example was described where the weighing device 30 outputs indicating abandoned goods (step S350 in FIG. 23D) when a predetermined time has passed in a state where all of the goods still remain (step S314 (YES) in FIG. 23A), but the measurement device 30 does not have to output indicating abandoned goods no matter how much time has passed in a state where all of the goods still remain.

Even when not outputting indicating abandoned goods no matter how much time has passed, the weighing device 30 may output indicating that goods are left behind (step S360 in FIG. 23D) when a predetermined time has passed in a state where some of the goods still remain (step S344 (YES) in FIG. 23C). That is, the weighing device 30 may output that goods are left behind when a predetermined time has passed at a time when the measured weight increases from the customer waiting state and then the measured weight decreases to a value other than zero (some goods are released from the weighing device 30 into the container 320 based on operation of the goods release operation unit 36) and then the measured weight does not increase or decrease, without outputting anything to the display printing device 40 no matter how much time has passed at a time when the measured weight increases from the customer waiting state (goods released from the goods supply device 300 to the weighing device 30 based on operation of the goods release operation unit 303) and then the measured weight does not increase or decrease (at a time when there is no operation of the goods release operation unit 303 or the goods supply device 36). In other words, the display printing device 40 displays information relating to left behind goods (for example, the informing screen W3 of FIG. 24C) but does not have to display information relating to abandoned goods (for example, the informing screen W2 of FIG. 24B).

Even when not outputting indication of abandoned goods no matter how much time has passed in a state where all the goods still remain, the weighing device 30 may display information indicating an error (for example, "ERROR") on the display unit 35 (one or more from among the display 35a, the display 35b, the display 35c, and the display 35e) at a time when a predetermined time has passed in a state where all of the goods still remain. The weighing device 30 may display information prompting another operation of the goods release operation unit 36 (for example, "PUSH AGAIN") on the display unit 35 (one or more from among the display 35a, the display 35b, the display 35c, and the display 35e) at a time when a predetermined time has passed in a state where some of the goods still remain.

The weighing device 30 may erase information indicating an error ("ERROR") that is displayed on the display unit 35 when the measured weight decreases or increases at a time when a predetermined time has passed in a state where all of goods still remain and information indicating an error ("ERROR") is displayed on the display unit. For example, the weighing device 30 may display on the display unit 35 information such as that illustrated in FIG. 9C instead of information indicating an error when the measured weight decreases, and may display on the display unit 35 information such as that illustrated in FIG. 9A instead of information indicating an error when the measured weight increases. Instead of the above, the weighing device 30 may maintain display without erasing information indicating an error when the measured weight increases at a time when a predetermined time has passed in a state where all of goods still remain and information indicating an error ("ERROR") is displayed on the display unit. Similarly, when the measured weight decreases, the weighing device 30 may maintain display without erasing the information indicating an error.

The weighing device 30 may erase information prompting another operation of the goods release operation unit 36 ("PUSH AGAIN") displayed on the display unit 35 when the measured weight decreases or increases at a time when a predetermined time has passed in a state where some of the goods still remain and information prompting another operation of the goods release operation unit 36 ("PUSH AGAIN") is displayed on the display unit 35. For example, the weighing device 30 may display information such as that illustrated in FIG. 9C instead of information prompting another operation of the goods release operation unit 36 when the measured weight decreases. When the measured weight increases, information indicating an error ("ERROR") may be displayed instead of information prompting another operation of the goods release operation unit 36. Note that the weighing device 30 may maintain display without erasing information prompting operation of the goods release operation unit 36 ("PUSH AGAIN") until the measured weight reaches zero even when decreased at a time when a predetermined time has passed in a state where some of the goods still remain and information prompting another operation of the goods release operation unit 36 ("PUSH AGAIN") is displayed on the display unit 35.

(16) In the above embodiments, an example was described where the sales processing system 1 is provided with a weighing device 10 having a display function (display unit 15), but the sales processing system 1 may be provided with a weighing device that does not have a display function (referred to as a weighing device 50) and a display device that has the display unit 15 (referred to as a display device 51) instead of the weighing device 10. The display device 51 acquires information (such as the value of the measured weight) from the weighing device 50 and controls the display of the display unit 15 in the same manner as the weighing device 10. Furthermore, the sales processing system 1 may be provided with a weighing device (referred to as a weighing device 52) provided with a display (for example, the display 15d that displays the measured weight) and a display device (referred to as a display device 53) provided with a display (for example, the display 15a, the display 15b, the display 15c, or the display 15e). The display device 53 acquires information (such as the value of the measured weight) from the weighing device 52 and controls display of the display provided by itself in the same manner as the weighing device 10. That is, the weighing device of the first weighing unit 4A does not itself need to be provided with all of the displays (displays 15a to 15e). The same is true for the weighing device of the second weighing unit 4B and the weighing device of the third weighing unit 4C.

(17) The weighing device (weighing device 10, weighing device 20, weighing device 30) may be provided with a function (reader/writer (R/W)) that reads and writes RFID (radio frequency identifier) tags (for example, IC (integrated circuit) tags). For example, the weighing device 10 may be provided with the above R/W in the vicinity of the operation unit 16 or the display unit 15. The weighing device 10 may read, for example, a customer ID (user identifier), employee ID, or the like stored in an electronic medium (IC card or the like) or an electronic device (smart phone, wearable terminal, or the like) with a built-in RFID tag. The weighing device 10 may output to the display printing device 40 identification information (device identification information or goods identification information) stored by the weighing device 10 and information read from the electronic medium or the like in addition to the calculated purchase weight instead of or in addition to the operation of the operation unit 16. Thus, the display printing device 40 may obtain information relating to the operator of the weighing device 10 (information that identifies whether the operator is a customer or employee, and individual operators). By linking with a customer management system (for example, a point system) or the like, it is possible to add a discount or points for each operator (customer). Note that in the weighing device 10, reading by the R/W may be performed before the operation of the operation unit 16 is performed, the weighing device 10 may output the information described above according to the operation of the operation unit 16, and in the weighing device 10, the operation of the operation unit 16 may be made unnecessary, and the information described above output according to reading of the information by the R/W after the stabilization of the measured weight. In this use case, a reader (R/W of R) may be used instead of the reader/writer.

The display printing device 40 and the POS terminal may also be provided with the reader/writer (R/W). While related to (11) above, the weighing device 10 may output the identification information stored by the weighing device 10 and the calculated purchase weight to the electronic medium, electronic device, or the like. By reading the electronic medium or the like, the display printing device 40 and the POS terminal may obtain information (information that identifies whether the operator is a customer or employee, and individual operators) relating to the operator of the weighing device 10 before printing and issuing the label, or before adjustment.

(18) In the above embodiments, an example was described where information (warning information) is directly transmitted from the weighing device to the employee terminal when a good has reached a warning weight, when an abnormal operation is performed, when there are abandoned goods, or when there are left behind goods, but information may be transmitted to the employee terminal via the display printing device (from the display printing device).

(19) A light (for example, an LED, or the like) may be provided on the sales unit 2 to inform the employee. For example, the light may be illuminated when a good reaches a warning weight, when an abnormal operation is performed, when there are abandoned goods, or when there are left behind goods. The light may emit light in different ways depending on various circumstances. The light emission of the light may be controlled by the weighing device or by the display printing device. A single lamp may be provided for the entire shelf 3, or one may be provided for each unit (each of the first weighing unit 4A, the second weighing unit 4B, and the third weighing unit 4C), or one may be provided for each weighing device (goods supply device).

(20) Some or all of the functions (input/output, storage, processing (including determination)) of each device (weighing devices 10, 20, 30, display printing device 40, display device 80) may be realized in a device other than the device described as the entity that executes the function. For example, the weighing device 10 (and likewise, the weighing device 20) may be provided with a weighing unit, an operation unit, and a communication unit, and may transmit weighing information and operation information to a cloud server, and the cloud server may control the operation of the weighing device 10 (weighing device 20) based on the information transmitted from the weighing device 10 (weighing device 20) (that is, it may transmit control information for controlling the operation of the weighing device 10 (weighing device 20) to the weighing device 10 (weighing device 20)). In addition, the weighing device 30 may be provided with a weighing unit and a communication unit, and transmit weighing information to the cloud server, and the cloud server may control the operation of the weighing device 30 based on the information transmitted from the weighing device 30. Instead of the cloud server, the display printing device 40 or the display device 80 may control the operation of the weighing devices (weighing devices 10, 20, 30). In addition, the display printing device 40 may be provided with a display unit, a communication unit, a printing unit, and a communication unit, and may transmit received information from the weighing device and operation information for the display unit and the like to the cloud server, and the cloud server may control the operation of the display printing device 40 based on the information transmitted from the display printing device 40. The display printing device 40 may display a screen generated by the cloud server using a browsing function. The same is true for the display device 80.

The embodiments will be summarized below.

### [Background Art]

For example, systems that sell products by weighing them are known (see, for example, JP H6-50740).

### [Problem to Be Solved by Invention]

However, conventional systems such as that shown in Patent Literature 1 do not adequately address the various situations that may be anticipated in the sale of goods by weight, and there is room for improvement. The present invention has been made in consideration of the above circumstances, and an object thereof is to provide a technique that can suitably handle various situations anticipated in the sale of goods by weight.

### [Means for Solving Problem]

(A1) A weighing device (for example, weighing device 10, weighing device 20) provided with weighing means (for example, weighing unit 14, weighing unit 24), a first display region (for example, display 15d, display 25d) for displaying a measured weight by the weighing means, a second display region (for example, display 15a, display 25a) for displaying a decrease in the measured weight as a purchase weight, a third display region (for example, display 15b, display 25b) for displaying a unit price, and a fourth display region (for example, display 15c, display 25c) for displaying a purchase amount based on the unit price and the purchase weight, and being further provided with display control means for displaying the purchase amount in the fourth display region when the measured weight has decreased (when the value in the first display region has decreased), and for displaying information other than the purchase amount (for example, "ERROR") as a display of the fourth display region or hiding a display of the fourth display region when the measured weight has increased (the value in the first display region has increased), and a modifying means (for example, step S89 of FIG. 13C) for modifying a display of the fourth display region to a display indicating zero when the display control means is displaying information other than the purchase amount (for example, "ERROR") as a display of the fourth display region or when a display of the fourth display region is hidden.

According to the configuration of A1, in a weighing device (weighing device 10, weighing device 20) in which the decrease in the measured weight is regarded as the purchase weight (sales weight) of the good, it is possible to suitably respond to various anticipated situations (states, circumstances). For example, when display in the fourth display region is displaying information other than the purchase amount or when display in the fourth display region is hidden, the display in the fourth display region can be modified to a display indicating zero.

(A2) The weighing device according to A1 is equipped with output means (for example, communication unit 17, communication unit 27) that outputs (for example, step S91 of FIG. 13C) a request to obtain the unit price to be displayed in the third display region (for example, unit price acquisition request information) when the modifying means modifies the display in the fourth display region to a display indicating zero.

According to the configuration of A2, when the modifying means modifies the display in the fourth display region, the latest unit price can be obtained.

(A3) The weighing device according to A1 or A2, wherein the modifying means modifies the display in the fourth display region to a display indicating zero when a state where the measured weight is increased continues for a predetermined time.

According to the configuration of A3, the display can be appropriately modified to indicate zero as time passes.

(A4) A display device (for example, display device 51, display device 53) provided with a first display region for displaying a measured weight, a second display region for displaying a decrease in the measured weight as a purchase weight, a third display region for displaying a unit price, and a fourth display region for displaying a purchase amount based on the unit price and the purchase weight, and being further provided with display control means for displaying the purchase amount in the fourth display region when the measured weight has decreased, and for displaying information other than the purchase amount as a display of the fourth display region or hiding a display of the fourth display region when the measured weight has increased, and modifying means for modifying a display of the fourth display region to a display indicating zero when the display control means is displaying information other than the purchase amount as a display of the fourth display region or when a display of the fourth display region is hidden.

According to the configuration of A4, the same effect as that of A1 can be obtained.

(B1) A sales system (for example, sales processing system 1) including a weighing device (for example, weighing device 10, weighing device 20, weighing device 30) and a display device (for example, display printing device 40, display device 80), wherein the weighing device is provided with weighing means (for example, weighing unit 14, weighing unit 24, weighing unit 34) for measuring the weight of a good, and output means (for example, communication unit 17, communication unit 27, communication unit 37) for outputting goods purchase information including a purchase weight value based on a measured value from the weighing means, and the display device is provided with receiving means (for example, communication unit 47) for receiving the goods purchase information, and display means (for example, display unit 45) for displaying a goods selection region (for example, good button) including a good name and a purchase weight value based on the goods purchase information received from the receiving means, the display means being capable of displaying one goods selection region (for example, good button B4 illustrated in FIG. 16C) including an added purchase weight value in which the purchase weight value of the good included in the goods selection region being displayed and the purchase weight value of the good included in the goods purchase information are added when the goods purchase information of the same good as the good being displayed in the goods selection region is received by the receiving means.

According to the configuration of B1, the display printing device (display printing device 40, display device 80) that communicates with the weighing device can respond appropriately to various anticipated situations (states). For example, in the display printing device above, it is possible that a plurality of good buttons (goods selection region) for the same good are displayed, which makes operation cumbersome. According to the configuration of B1, the display printing device can be simplified because display is gathered into one good button.

(B2) The sales system according to B1, wherein the display means is capable of displaying an image for confirming whether adding is required (for example, the adding necessity confirmation screen W1 illustrated in FIG. 16A) when the goods purchase information of the same good as the good being displayed in the goods selection region is received by the receiving means.

According to the configuration of B2, it is possible to display gathered into one good button depending on the confirmation result.

(B3) The sales system according to B1 or B2, wherein when the goods purchase information of the same good as the good being displayed in the goods selection region is received by the receiving means, at a time when the time passed from the time when the past goods purchase information for the good corresponding to the goods selection region being displayed was received or from the time when the goods selection region being displayed was displayed to the time when the current goods purchase information for the good is received is less than a predetermined time (one reference time), the display means displays one goods selection region including the added purchase weight value, and at a time when the time passed is equal to or greater than the predetermined time, displays the goods selection region based on the goods purchase information separately from the goods selection region being displayed.

According to the configuration of B3, it is possible to display gathered into one good button depending on the time passed.

(B4) An information terminal (for example, display printing device 40, display device 80) capable of communicating with a weighing device that weighs a weight of a good, provided with receiving means for receiving goods purchase information including a weight value output from the weighing device, and display means for displaying a goods selection region including a good name and a purchase weight value based on the goods purchase information received by the receiving means, wherein when the goods purchase information of the same good as the good being displayed in the goods selection region is received by the receiving means, the display means is capable of displaying one goods selection region including an added purchase weight value in which the purchase weight value of the good included in the goods selection region being displayed and the purchase weight value of the good included in the goods purchase information are added.

According to the configuration of B4, the same effect as that of B1 can be obtained.

(C1) A weighing device (for example, weighing device 30) provided with weighing means (for example, weighing unit 34) for measuring a weight of a good, and output means (for example, communication unit 37) for outputting goods purchase information including a purchase weight value based on a measured value from the weighing means, wherein: when the measured value from the weighing means increases from zero to a positive value and then decreases from the positive value to zero, the output means outputs goods purchase information including the positive value as the purchase weight value (for example, FIG. 19A, FIG. 19B, step S330 of FIG. 23B); and when the measured value increases from zero and then becomes a value other than zero without ever decreasing, and the measured value does not change from the value other than zero for a predetermined time, the output means outputs information indicating that all of the weighed goods remain (for example, indicating abandoned goods) (for example, FIG. 20, step S350 of FIG. 23D).

According to the configuration of C1, the weighing device (weighing device 30) can suitably handle various anticipated situations (states, circumstances). For example, when the measured value does not change from a value other than zero for a predetermined time, information may be output indicating that all of the weighed goods remain. Furthermore, information indicating that all of the weighed goods remain can be output without providing a sensor or the like for detecting a release operation for goods in the goods supply device or the weighing device.

(C2) A weighing device (for example, weighing device 30) provided with weighing means (for example, weighing unit 34) for measuring a weight of a good, and output means (for example, communication unit 37) for outputting goods purchase information including a purchase weight value based on a measured value from the weighing means, wherein: when the measured value from the weighing means increases from zero to a positive value and then decreases from the positive value to zero, the output means outputs goods purchase information including the positive value as the purchase weight value (for example, FIG. 19A, FIG. 19B, step S330 of FIG. 23B); and when the measured value increases from zero and then decreases to become a value other than zero, and the measured value does not change from the value other than zero for a predetermined time, the output means outputs information indicating that some of the weighed goods remain (for example, indicating left behind goods) (for example, FIG. 21A, FIG. 21B, step S360 of FIG. 23E).

According to the configuration of C2, the weighing device (weighing device 30) can suitably handle various anticipated situations (states, circumstances). For example, when the measured value increases from zero and then decreases to a value other than zero, and the measured value does not change from the value other than zero for a predetermined time, information may be output indicating that some of the weighed goods remain. Furthermore, information indicating that some of the weighed goods remain can be output without providing a sensor or the like for detecting a release operation for goods in the goods supply device or the weighing device.

(C3) A weighing device (for example, weighing device 30) provided with weighing means (for example, weighing unit 34) for measuring a weight of a good, and output means (for example, communication unit 37) for outputting goods purchase information including a purchase weight value based on a measured value from the weighing means, wherein: when the measured value from the weighing means increases from zero to a positive value and then decreases from the positive value to zero, the output means outputs goods purchase information including the positive value as the purchase weight value (for example, FIG. 19A, FIG. 19B, step S330 of FIG. 23B); and when the measured value increases from zero and then decreases, and the measured value increases before reaching zero, the output means outputs abnormal information indicating that an abnormal operation has occurred (for example, FIG. 22, step S370 of FIG. 23F).

According to the configuration of C3, the weighing device (weighing device 30) can suitably handle various anticipated situations (states, circumstances). For example, when the measured value increases from zero and then decreases, and the measured value increases before reaching zero, abnormal information can be output indicating that an abnormal operation was performed. Furthermore, abnormal information indicating that an abnormal operation has occurred can be output without providing a sensor or the like for detecting a release operation for goods in the goods supply device or the weighing device.

(C4) A weighing device (for example, weighing device 30) provided with weighing means (for example, weighing unit 34) for measuring a weight of a good, and output means (for example, communication unit 37) for outputting goods purchase information including a purchase weight value based on a measured value from the weighing means, wherein when the measured value from the weighing means increases from zero to a positive value and then decreases from the positive value to zero, and the measured value, in the process of reaching the positive value from zero, never decreased and the measured value, in the process of reaching zero from the positive value, never increased, the output means outputs goods purchase information including the positive value as the purchase weight value based on the measured value reaching zero (for example, FIG. 19A, FIG. 19B, step S330 of FIG. 23B).

According to the configuration of C4, the weighing device (weighing device 30) can suitably handle various anticipated situations (states, circumstances). For example, in the above weighing device, so long as the device is operated normally, the measured weight will increase from zero, decrease once, and then not increase again until reaching zero. However, when the an abnormal operation is performed, the measured weight may decrease once, and then increase again until it reaches zero. According to the configuration of C4, goods purchase information can be output based on normal operation. Furthermore, it can be determined whether operation was normal and goods purchase information can be output without providing a sensor or the like for detecting a release operation for goods in the goods supply device or the weighing device.

(C5) A sales system (for example, sales processing system 1) including a weighing device (for example, weighing device 30) and a display device (for example, display printing device 40, display device 80), wherein the weighing device is provided with weighing means (for example, weighing unit 34) for measuring the weight of a good, and output means (for example, communication unit 37) for outputting goods purchase information including a purchase weight value based on a measured value from the weighing means, and the display device is provided with receiving means (for example, communication unit 47) and display means (for example, display unit 45), wherein: when the measured value increases from zero and then decreases and the measured value has increased before reaching zero, the output means outputs abnormal information indicating that an abnormal operation has occurred (warning information indicating that an abnormal operation was performed) instead of the goods purchase information; and when the receiving means has received the goods purchase information, the display means displays a goods selection region (for example, good button B5 illustrated in FIG. 24A) including a good name and a purchase weight value based on the goods purchase information, and when the receiving means has received the abnormality information, the display means displays information indicating that an abnormal operation was performed (for example, informing screen W4 shown in FIG. 24D) based on the abnormality information.

According to the configuration of C5, the same effect as that of C4 can be obtained.

Note that the programs for realizing each of the devices described above (weighing devices 10, 20, 30, 50, 52, goods supply devices 100, 200, 300, display printing device 40, display devices 51, 53, 80, etc.) may be recorded on a computer-readable recording medium, and the programs may be read into a computer system and executed. Note that the term "computer system" here includes an OS and hardware such as peripheral equipment. Furthermore, "computer-readable recording medium" means portable media such as a floppy disk, magneto-optical disk, ROM, or CD-ROM, and storage devices such as hard disks incorporated in computer systems. Moreover, "computer-readable recording medium" also includes those that hold a program for a certain period of time, such as volatile memory (RAM) inside a computer system that serves as a server or client when the program is transmitted via a network such as the Internet or a communication line such as a telephone line. Furthermore, the above program may be transmitted from a computer system in which the program is stored in a storage device or the like to another computer system via a transmission medium, or by a transmission wave in the transmission medium. Here, a "transmission medium" that transmits programs means a medium that has a function to transmit information, such as a network (communication network) such as the Internet or a communication line (communication line) such as a telephone line. Furthermore, the above program may be for realizing part of the functions described above. Moreover, the functions described above may be realized in combination with a program already recorded in the computer system, that is, a so-called differential file (differential program).

### [Description of Reference Numerals]

1 ... Sales processing system
2 ... Sales unit
3 ... Shelf
4A ... First weighing unit
4B ... Second weighing unit
4C ... Third weighing unit
100, 200, 300 ... Goods supply device
10, 20, 30, 50, 52 ... Weighing device
40 ... Display printing device
51, 53, 80 ... Display device

## Claims

1. A weighing device, comprising:
weighing means for measuring a weight of a good, and
output means for outputting goods purchase information comprising a purchase weight value based on a measured value from the weighing means, wherein:
when the measured value from the weighing means increases from zero to a positive value and then decreases from the positive value to zero, the output means outputs goods purchase information comprising the positive value as the purchase weight value, and
when the measured value increases from zero and then becomes a value other than zero without ever decreasing, and the measured value does not change from the value other than zero for a predetermined time, the output means outputs information indicating that all of the weighed goods remain.

2. A weighing device, comprising:
weighing means for measuring a weight of a good, and
output means for outputting goods purchase information comprising a purchase weight value based on a measured value from the weighing means, wherein:
when the measured value from the weighing means increases from zero to a positive value and then decreases from the positive value to zero, the output means outputs goods purchase information comprising the positive value as the purchase weight value, and
when the measured value increases from zero and then decreases to become a value other than zero, and the measured value does not change from the value other than zero for a predetermined time, the output means outputs information indicating that some of the weighed goods remain.

3. A weighing device, comprising:
weighing means for measuring a weight of a good, and
output means for outputting goods purchase information comprising a purchase weight value based on a measured value from the weighing means, wherein:
when the measured value from the weighing means increases from zero to a positive value and then decreases from the positive value to zero, the output means outputs goods purchase information comprising the positive value as the purchase weight value, and
when the measured value increases from zero and then decreases, and the measured value increases before reaching zero, the output means outputs abnormal information indicating that an abnormal operation has occurred.

4. A weighing device, comprising:
weighing means for measuring a weight of a good, and
output means for outputting goods purchase information comprising a purchase weight value based on a measured value from the weighing means, wherein:
when the measured value from the weighing means increases from zero to a positive value and then decreases from the positive value to zero, and then the measured value does not decrease even once in the process of starting from zero until reaching the positive value and the measured value does not increase even once in the process of starting from the positive value until reaching zero, the output means outputs goods purchase information comprising the positive value as the purchase weight value based on the fact that the measured value has reached zero.

5. A sales system, comprising:
a weighing device and a display device, wherein
the weighing device comprises weighing means for measuring a weight of a good, and output means for outputting goods purchase information including a purchase weight value based on a measured value from the weighing means, and
the display device comprises receiving means and display means, wherein:
when the measured value increases from zero and then decreases and the measured value has increased before reaching zero, the output means outputs abnormal information indicating that an abnormal operation has occurred instead of the goods purchase information, and
when the receiving means has received the goods purchase information, the display means displays a goods selection region comprising a good name and a purchase weight value based on the goods purchase information, and when the receiving means has received the abnormal information, the display means displays information indicating that an abnormal operation has occurred based on the abnormal information.

6. A weighing device, comprising:
weighing means, a first display region for displaying a measured weight from the weighing means, a second display region for displaying a decrease in the measured weight as a purchase weight, a third display region for displaying a unit price, and a fourth display region for displaying a purchase amount based on the unit price and the purchase weight, and further comprising:
display control means for displaying the purchase amount in the fourth display region when the measured weight has decreased, and for displaying information other than the purchase amount as a display of the fourth display region or hiding a display of the fourth display region when the measured weight has increased; and
modifying means for modifying a display of the fourth display region to a display indicating zero when the display control means is displaying information other than the purchase amount as a display of the fourth display region or when a display of the fourth display region is hidden.

7. The weighing device according to claim 6, further comprising
output means that outputs a request to acquire a unit price to display in the third display region when modifying the display of the fourth display region to a display indicating zero using the modifying means.

8. The weighing device according to claim 6 or claim 7, wherein the modifying means modifies the display of the fourth display region to a display indicating zero when the state where the measured weight has increased continues for a predetermined time.

9. A display device, comprising:
a first display region for displaying a measured weight, a second display region for displaying a decrease in the measured weight as a purchase weight, a third display region for displaying a unit price, and a fourth display region for displaying a purchase amount based on the unit price and the purchase weight, and further comprising:
display control means for displaying the purchase amount in the fourth display region when the measured weight has decreased, and for displaying information other than the purchase amount as a display of the fourth display region or hiding a display of the fourth display region when the measured weight has increased; and
modifying means for modifying a display of the fourth display region to a display indicating zero when the display control means is displaying information other than the purchase amount as a display of the fourth display region or when a display of the fourth display region is hidden.
